(19) Europäisches Patentamt
European Patent Office
Office européen des brevets

(11) **EP 4 296 615 A1**

(12) **EUROPEAN PATENT APPLICATION**
published in accordance with Art. 153(4) EPC

(43) Date of publication:
**27.12.2023 Bulletin 2023/52**

(21) Application number: **21929555.7**

(22) Date of filing: **10.03.2021**

(51) International Patent Classification (IPC):
***G01C 3/00*** (2006.01)

(52) Cooperative Patent Classification (CPC):
**G06T 7/55**

(86) International application number:
**PCT/CN2021/080081**

(87) International publication number:
**WO 2022/188077 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **JIANG, Xuesong
Shenzhen, Guangdong 518129 (CN)**
• **ZOU, Yizhuo
Shenzhen, Guangdong 518129 (CN)**
• **XU, Bin
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **DISTANCE MEASURING METHOD AND DEVICE**

(57)      A distance measurement method and a distance measurement apparatus (602) are provided, to effectively improve distance measurement stability and reduce distance measurement fluctuation, to effectively reduce a risk. The distance measurement method and the distance measurement apparatus may be applied to a self-driving field, an intelligent driving field, or an aerospace field. The distance measurement method includes the following steps. S701: Determine a first scale. S702: Determine a first distance based on the first scale, a second scale, and a second distance. The first scale is a scale of a first object in a first image. The first image is an image shot by an image shooting component (601) at a first moment. The second scale is a scale of the first object in a second image. The second image is an image shot by the image shooting component (601) at a second moment. The second moment is before the first moment. The second distance is a distance between the first object and the image shooting component (601) at the second moment. The first distance is a distance between the first object and the image shooting component (601) at the first moment.

FIG. 6

**Description**

**TECHNICAL FIELD**

This application relates to the distance measurement field, and in particular, to a distance measurement method and apparatus.

**BACKGROUND**

Automatic distance measurement can be applied to many fields, such as a self-driving field and an aerospace field, to realize distance sensing and collision risk assessment, thereby effectively avoiding collision.

Specifically, automatic distance measurement may be achieved by using technologies such as laser radar distance measurement, monocular distance measurement, and binocular distance measurement. The laser radar distance measurement is achieved by calculating round-trip time from a laser to a to-be-measured object. The monocular distance measurement is achieved by identifying and analyzing a scale of the to-be-measured object in a monocular image. The binocular distance measurement is achieved by identifying and analyzing a parallax of the to-be-measured object in a binocular image.

However, each distance measurement is susceptible to interference from various internal or external factors. For example, the laser radar distance measurement may be affected by a weather, for example, a rainy or snowy weather, the monocular distance measurement may be affected by a scale error, and the binocular distance measurement may be affected by a parallax error. Consequently, distance measurement lacks stability, the distance measurement fluctuates greatly, and a collision risk cannot be reduced.

**SUMMARY**

Embodiments of this application provide a distance measurement method and apparatus, to resolve a problem that distance measurement lacks stability and the distance measurement fluctuates greatly, thereby effectively improving distance measurement accuracy and reducing a collision risk.

To achieve the foregoing objective, the following technical solutions are used in this application.

According to a first aspect, a distance measurement method is provided. The distance measurement method includes: determining a first scale, and determining a first distance based on the first scale, a second scale, and a second distance. The first scale is a scale of a first object in a first image. The first image is an image shot by an image shooting component at a first moment. The second scale is a scale of the first object in a second image. The second image is an image shot by the image shooting component at a second moment. The second moment is before the first moment. The second distance is a distance between the first object and the image shooting component at the second moment. The first distance is a distance between the first object and the image shooting component at the first moment.

Based on the method according to the first aspect, a scale variation of the first object in an image can accurately reflect a change of a distance. For example, if the scale of the first object in the image is increasing, a distance between the first object and the image shooting component is decreasing. Conversely, if the scale of the first object in the image is decreasing, the distance between the first object and the image shooting component is increasing. Therefore, a distance measurement apparatus may determine the first distance based on the second distance and a change of the distance reflected by the first scale and the second scale. In other words, the distance measurement apparatus may determine a distance at a next moment based on a distance at a previous moment and a change of a distance from the previous moment to the next moment. Further, on the basis that a distance determined at the first time is accurate, a distance determined at each subsequent moment is accurate. Therefore, a problem that distance measurement lacks stability and the distance measurement fluctuates greatly can be resolved, thereby effectively improving distance measurement stability and reducing distance measurement fluctuation, to reduce a collision risk.

In a possible design solution, the first scale may be determined based on the second scale and a scale change amount. The scale change amount may indicate a scale variation between the first scale and the second scale. It should be understood that, because the scale change amount may represent the scale variation between the first scale and the second scale, the distance measurement apparatus may quickly determine the first scale based on the second scale and the scale change amount, thereby improving calculation efficiency of the first scale.

Optionally, the scale change amount may be determined based on a location relationship between a first contour point and a second contour point. The second contour point may be a pixel on a second contour. The second contour may be a contour of the first object in the second image. A contour of the first object in the first image may be a first contour. The first contour point may be a pixel that is on the first contour and that is corresponding to a location of the second contour point. It should be understood that, because a change of a contour size of the first object in the image may accurately reflect the scale variation of the first object in the image, and a change of a contour point location may accurately reflect the change of the contour size, the distance measurement apparatus may accurately determine the scale change amount based on the location relationship between the first contour point and the second contour point.

Further, the location relationship between the first contour point and the second contour point may meet

$$\begin{cases} x_t = s^x_{t-i} * x_{t-i} + d^x_{t-i} \\ y_t = s^y_{t-i} * y_{t-i} + d^y_{t-i} \end{cases}$$

. Here, t may be a positive integer, and i may be a positive integer less than or equal to t. $(x_t, y_t)$ may be used to represent a location of the first contour point. $(x_{t-i}, y_{t-i})$ may be used to represent the location of the second contour point. $s^x_{t-i}$ may be the scale change amount in an x-axis direction. $s^y_{t-i}$ may be the scale change amount in a y-axis direction. $d^x_{t-i}$ and $d^y_{t-i}$ may be compensation values. In this way, the scale change amount between the first scale and the second scale may be the scale change amount in the x-axis direction, the scale change amount in the y-axis direction, or a weighted sum of the scale change amount in the x-axis direction and the scale change amount in the y-axis direction, so that in practice, a scale change amount that is more suitable for an actual situation may be selected.

Further, the first contour may be determined from a first region of the first image, and the second contour may be determined from a second region of the second image. In this way, compared with a manner of determining a contour from an entire image, determining the contour from only a portion of the image can effectively reduce a calculation amount, thereby improving processing efficiency.

In a possible design solution, the first scale, the second scale, the first distance, and the second distance may

$$L_t = L_{t-i} * \frac{S_{t-i}}{S_t}$$

meet the following relationship: . Here, t may be a positive integer, and i may be a positive integer less than or equal to t. $L_t$ may be the first distance. $L_{t-i}$ may be the second distance. $S_t$ may be the first scale. $S_{t-i}$ may be the second scale. It should be understood that the first distance can be quickly determined by preconfiguring the foregoing operational relationship between the first scale, the second scale, the first distance, and the second distance, thereby improving processing efficiency.

In a possible design solution, the determining a first distance based on the first scale, a second scale, and a second distance may include: determining the first distance based on the first scale, the second scale, the second distance, and a third distance. The third distance may be a distance that is between the first object and the image shooting component and that is measured at the first moment. It should be understood that, because the measured third distance is also used to determine the first distance, the determined first distance may be more accurate, and an error is smaller.

Optionally, the determining the first distance based on the first scale, the second scale, the second distance, and a third distance may include: determining a distance residual based on the first scale, the second scale, the second distance, and the third distance; and determining the first distance based on the distance residual and the third distance. The first scale, the second scale, the second distance, the third distance, and the distance residual may meet the following

$$residual = \sum_{i=1}^{n} LossFunction\left(L'_t - L_{t-i} * \frac{S_{t-i}}{S_t}\right)$$

relationship: . Here, *residual* may be the distance residual. $L'_t$ may be the third distance. $L_{t-i}$ may be the second distance. $S_t$ may be the first scale. $S_{t-i}$ may be the second scale. Here, n is a positive integer less than or equal to t. It should be understood that, because the distance between the first object and the image shooting component may be determined through continuous iterative optimization based on the distance residual, the determined distance between the first object and the image shooting component may be more accurate through the continuous iterative optimization.

Optionally, the third distance may be a distance determined based on a third image of the first object. The third image may be an image shot by the image shooting component at the first moment. The first object may be located in a third region in the third image. The first object may be located in a first region in the first image. A region for projection of the third region in the first image may be a first projection region. A degree of overlap between the first projection region and the first region may be greater than an overlap degree threshold. In this way, an object that is the same as that in the first image, namely, the first object, can be determined from the third image by using region projection and calculation of the degree of overlap of the projection region, to avoid using a distance of another object to determine the first distance, thereby further improving distance measurement accuracy.

According to a second aspect, a distance measurement apparatus is provided. The apparatus includes a scale determining module and a distance determining module. The scale determining module is configured to determine a first scale. The distance determining module is configured to determine a first distance based on the first scale, a second scale, and a second distance. The first scale is a scale of a first object in a first image. The first image is an image shot by an image shooting component at a first moment. The second scale is a scale of the first object in a second image. The second image is an image shot by the image shooting component at a second moment. The second moment is before the first moment. The second distance is a distance between the first object and the image shooting component at the second moment. The first distance is a distance between the first object and the image shooting component at the first moment.

In a possible design solution, the first scale may be determined based on the second scale and a scale change amount. The scale change amount may indicate a scale variation between the first scale and the second scale.

Optionally, the scale change amount may be determined based on a location relationship between a first contour point and a second contour point. The second contour point may be a pixel on a second contour. The second contour may be a contour of the first object in the second image. A contour of the first object in the first image may be a first contour. The first contour point may be a pixel that is on the first contour and that is corresponding to a location of the second contour point.

Further, the location relationship between the first contour point and the second contour point may meet

$$\begin{cases} x_t = s^x_{t-i} * x_{t-i} + d^x_{t-i} \\ y_t = s^y_{t-i} * y_{t-i} + d^y_{t-i} \end{cases}$$

. Here, t may be a positive integer, and i may be a positive integer less than or equal to t. $(x_t, y_t)$ may be used to represent a location of the first contour point. $(x_{t-i}, y_{t-i})$ may be used to represent the location of the second contour point. $s^x_{t-i}$ may be the scale change amount in an x-axis direction. $s^y_{t-i}$ may be the scale change amount in a y-axis direction. $d^x_{t-i}$ and $d^y_{t-i}$ may be compensation values. In this way, the scale change amount between the first scale and the second scale may be the scale change amount in the x-axis direction, the scale change amount in the y-axis direction, or a weighted sum of the scale change amount in the x-axis direction and the scale change amount in the y-axis direction, so that in practice, a scale change amount that is more suitable for an actual situation may be selected.

Further, the first contour may be determined from a first region of the first image, and the second contour may be determined from a second region of the second image.

In a possible design solution, the first scale, the second scale, the first distance, and the second distance may meet the following relationship: $L_t = L_{t-i} * \frac{S_{t-i}}{S_t}$ . Here, t may be a positive integer, and i may be a positive integer less than or equal to t. $L_t$ may be the first distance. $L_{t-i}$ may be the second distance. $S_t$ may be the first scale. $S_{t-i}$ may be the second scale. It should be understood that the first distance can be quickly determined by preconfiguring the foregoing operational relationship between the first scale, the second scale, the first distance, and the second distance, thereby improving processing efficiency.

In a possible design solution, the distance determining module may be further configured to determine the first distance based on the first scale, the second scale, the second distance, and a third distance. The third distance may be a distance that is between the first object and the image shooting component and that is measured at the first moment.

Optionally, the distance determining module may be further configured to determine a distance residual based on the first scale, the second scale, the second distance, and the third distance, and determine the first distance based on the distance residual and the third distance. The first scale, the second scale, the second distance, the third distance, and the distance residual may meet the following relationship:

$$residual = \sum_{i=1}^{n} LossFunction(L'_t - L_{t-i} * \frac{S_{t-i}}{S_t})$$

. Here, *residual* may be the distance residual. $L'_t$ may be the third distance. $L_{t-i}$ may be the second distance. $S_t$ may be the first scale. $S_{t-i}$ may be the second scale. Here, n is a positive integer less than or equal to t. It should be understood that, because the distance between the first object and the image shooting component may be determined through continuous iterative optimization based on the distance residual, the determined distance between the first object and the image shooting component may be more accurate through the continuous iterative optimization.

Optionally, the third distance may be a distance determined based on a third image of the first object. The third image may be an image shot by the image shooting component at the first moment. The first object may be located in a third region in the third image. The first object may be located in a first region in the first image. A region for projection of the third region in the first image may be a first projection region. A degree of overlap between the first projection region and the first region may be greater than an overlap degree threshold.

Optionally, the apparatus according to the second aspect may further include a transceiver module. The transceiver module may be configured to implement a transceiver function of the apparatus.

Optionally, the transceiver module may include a receiving module and a sending module. The receiving module is configured to implement a receiving function of the apparatus according to the second aspect. The sending module is configured to implement a sending function of the apparatus according to the second aspect.

Optionally, the apparatus according to the second aspect may further include a storage module, and the storage module stores programs or instructions. When the scale determining module and the distance determining module execute the programs or the instructions, the apparatus may perform the method according to the first aspect.

It should be noted that, the apparatus according to the second aspect may be a terminal device, a chip (system) or another part or component that may be disposed on a terminal device, or an apparatus that includes a terminal device. This is not limited in this application.

In addition, for technical effect of the apparatus according to the second aspect, refer to technical effect of the method according to the first aspect. Details are not described herein again.

According to a third aspect, a distance measurement apparatus is provided. The apparatus includes a processor. The processor is coupled to a memory. The processor is configured to execute a computer program stored in the memory, so that the apparatus performs the method according to the first aspect.

Optionally, the apparatus according to the third aspect may further include a receiver and a transmitter. The receiver is configured to implement a receiving function of the apparatus, and the transmitter is configured to implement a sending function of the apparatus. The transmitter and the receiver may also be integrated into one device, such as a transceiver. The transceiver is configured to implement the sending function and the receiving function of the apparatus.

It should be noted that, the apparatus according to the third aspect may be a terminal device, a chip (system) or another part or component that may be disposed on a terminal device, or an apparatus that includes a terminal device. This is not limited in this application.

In addition, for technical effect of the apparatus according to the third aspect, refer to technical effect of the method according to the first aspect. Details are not described herein again.

According to a fourth aspect, a distance measurement apparatus is provided. The apparatus includes a processor and a memory. The memory is configured to store a computer program. When the processor executes the computer program, the apparatus is enabled to perform the method according to the first aspect.

Optionally, the apparatus according to the fourth aspect may further include a receiver and a transmitter. The receiver is configured to implement a receiving function of the apparatus, and the transmitter is configured to implement a sending function of the apparatus. Optionally, the transmitter and the receiver may also be integrated into one device, such as a transceiver. The transceiver is configured to implement the sending function and the receiving function of the apparatus.

In this application, the apparatus according to the fourth aspect may be a terminal device, a chip (system) or another part or component that may be disposed on a terminal device, or an apparatus that includes a terminal device. This is not limited in this application.

In addition, for technical effect of the apparatus according to the fourth aspect, refer to technical effect of the method according to the first aspect. Details are not described herein again.

According to a fifth aspect, a distance measurement apparatus is provided. The apparatus includes a processor and an interface circuit. The interface circuit is configured to receive code instructions and transmit the code instructions to the processor. The processor is configured to run the code instructions to perform the method according to the first aspect.

Optionally, the apparatus according to the fifth aspect may further include a receiver and a transmitter. The receiver is configured to implement a receiving function of the apparatus, and the transmitter is configured to implement a sending function of the apparatus. Optionally, the transmitter and the receiver may also be integrated into one device, such as a transceiver. The transceiver is configured to implement the sending function and the receiving function of the apparatus.

Optionally, the apparatus according to the fifth aspect may further include a memory, and the memory stores programs or instructions. When the processor according to the fifth aspect executes the programs or the instructions, the apparatus is enabled to perform the method according to the first aspect.

It should be noted that, the apparatus according to the fifth aspect may be a terminal device, a chip (system) or another part or component that may be disposed on a terminal device, or an apparatus that includes a terminal device. This is not limited in this application.

In addition, for technical effect of the apparatus according to the fifth aspect, refer to technical effect of the method according to the first aspect. Details are not described herein again.

According to a sixth aspect, a distance measurement apparatus is provided. The apparatus includes a processor and a transceiver. The transceiver may be a transceiver circuit or an interface circuit. The transceiver is configured to exchange information between the apparatus and another apparatus. The processor executes program instructions to perform the method according to the first aspect.

Optionally, the apparatus according to the sixth aspect may further include a memory, and the memory stores programs or instructions. When the processor according to the sixth aspect executes the programs or the instructions, the apparatus is enabled to perform the method according to the first aspect.

It should be noted that, the apparatus according to the sixth aspect may be a terminal device, a chip (system) or another part or component that may be disposed on a terminal device, or an apparatus that includes a terminal device. This is not limited in this application.

In addition, for technical effect of the apparatus according to the sixth aspect, refer to technical effect of the method according to the first aspect. Details are not described herein again.

According to a seventh aspect, a terminal device is provided. The terminal device includes the distance measurement apparatus according to any one of the second aspect to the sixth aspect.

In addition, for technical effect of the terminal device according to the seventh aspect, refer to technical effect of the method according to the first aspect. Details are not described herein again.

According to an eighth aspect, a distance measurement system is provided. The system includes an image shooting component and a distance measurement apparatus. The image shooting component is configured to shoot a first image of a first object at a first moment, and shoot a first image of a second object at a second moment. The distance measurement apparatus is configured to perform the method according to the first aspect based on the first image and the second image.

Optionally, the image shooting component may include a monocular camera and/or a multiocular camera.

Optionally, the image shooting component may further include a laser rangefinder. The laser rangefinder is connected with the distance measurement apparatus.

In addition, for technical effect of the apparatus according to the eighth aspect, refer to technical effect of the method according to the first aspect. Details are not described herein again.

According to a ninth aspect, a computer-readable storage medium is provided. The computer-readable storage medium may include computer programs or instructions. When the computer programs or the instructions are run on a computer, the computer is enabled to perform the method according to the first aspect.

According to a tenth aspect, a computer program product is provided. The computer program product may include computer programs or instructions. When the computer programs or the instructions are run on a computer, the computer is enabled to perform the method according to the first aspect.

## BRIEF DESCRIPTION OF DRAWINGS

FIG. 1 is a schematic diagram of a scenario of self driving;
FIG. 2 is a schematic diagram of a scenario of aerospace;
FIG. 3 is a schematic diagram of a scenario of laser distance measurement;
FIG. 4 is a schematic diagram of a scenario of monocular distance measurement;
FIG. 5 is a schematic diagram of an application scenario of binocular distance measurement;
FIG. 6 is a schematic diagram of an architecture of a distance measurement system according to an embodiment of this application;
FIG. 7 is a schematic flowchart of a distance measurement method according to an embodiment of this application;
FIG. 8 is a schematic diagram of a second image before projection in a distance measurement method according to an embodiment of this application;
FIG. 9 is a schematic diagram of a first image in a distance measurement method according to an embodiment of this application;
FIG. 10 is a schematic diagram of a second image after projection in a distance measurement method according to an embodiment of this application;
FIG. 11 is a schematic diagram of a first scenario of spatial projection in a distance measurement method according to an embodiment of this application;
FIG. 12 is a schematic diagram of a second scenario of spatial projection in a distance measurement method according to an embodiment of this application;
FIG. 13 is a schematic diagram of a scenario of NCC detection in a distance measurement method according to an embodiment of this application;
FIG. 14 is a schematic simulation diagram of a distance measurement method according to an embodiment of this application;
FIG. 15 is a first schematic diagram of a structure of a distance measurement apparatus according to an embodiment of this application; and

FIG. 16 is a second schematic diagram of a structure of a distance measurement apparatus according to an embodiment of this application.

**DESCRIPTION OF EMBODIMENTS**

First, technical terms in embodiments of this application are described.

1. Automatic distance measurement

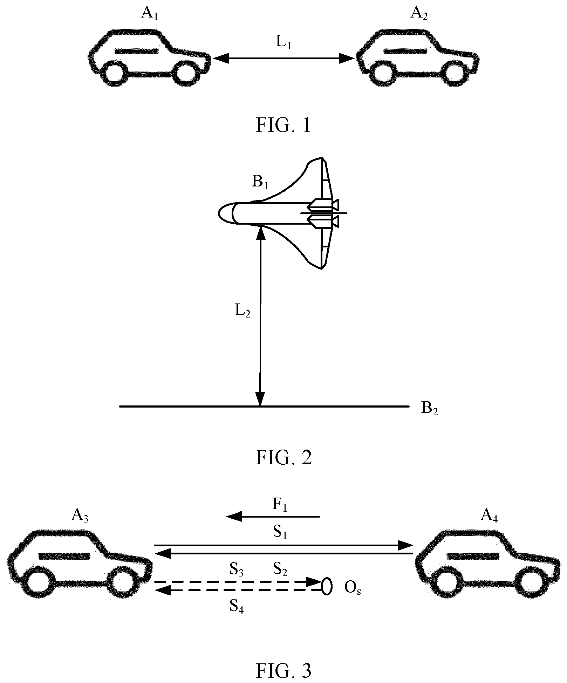

The automatic distance measurement is to automatically measure a distance between two objects. It can be applied to a self-driving field, an aerospace field, and the like to realize distance sensing and avoid collision. For ease of understanding, the following describes the automatic distance measurement with reference to FIG. 1 and FIG. 2.

FIG. 1 is a schematic diagram of a scenario of self driving. As shown in FIG. 1, a vehicle $A_1$ may automatically measure a vehicle distance $L_1$ between the vehicle $A_1$ and a vehicle $A_2$. If the vehicle $A_2$ is located in front of the vehicle $A_1$, and it is determined, based on measurement, that the vehicle distance $L_1$ is decreasing, the vehicle $A_1$ may decelerate to avoid rear-ending the vehicle $A_2$. Conversely, if the vehicle $A_2$ is located behind the vehicle $A_1$, and it is determined, based on measurement, that the vehicle distance $L_1$ is decreasing, the vehicle $A_1$ may accelerate to avoid being rear-ended by the vehicle $A_2$.

FIG. 2 is a schematic diagram of a scenario of aerospace. As shown in FIG. 2, an aircraft $B_1$ may automatically measure a height $L_2$ between the aircraft $B_1$ and a land $B_2$ to ensure that the aircraft $B_1$ can start deceleration at a suitable height, thereby ensuring that the aircraft $B_1$ can land safely.

Further, the automatic distance measurement may be implemented by using technologies such as laser distance measurement, monocular distance measurement, or binocular distance measurement, which are separately described below.

2. Laser distance measurement

The laser distance measurement is to determine a distance between a measured object and an image shooting component by determining round-trip time of laser light emitted by the image shooting component between the object and the image shooting component. The image shooting component may be a laser image shooting component, for example, a laser rangefinder. The following describes the laser distance measurement with reference to FIG. 3.

FIG. 3 is a schematic diagram of a scenario of laser distance measurement. As shown in FIG. 3, if a laser rangefinder determines that a time interval between transmitting laser light $S_1$ and receiving laser light $S_2$ is $t_1$, a distance $L_3$ between the laser rangefinder and a vehicle $A_4$, namely, a distance between a vehicle $A_3$ and the vehicle $A_4$, may be determined to be $\frac{C*t_1}{2}$ based on the time interval $t_1$ and a light speed C. The laser light $S_2$ is obtained based on reflection of the laser light $S_1$. In addition, since the laser light $S_2$ is received in a direction $F_1$, the laser rangefinder may further determine that the vehicle $A_4$ is located in an orientation opposite to the direction F1, to distinguish different measured objects by orientations.

Further, it can be learned according to the foregoing principle that if there is no interfering object between two adjacent objects, the laser rangefinder may accurately measure a distance between the two adjacent objects. If an interfering object exists between two adjacent objects due to weather or the like, the laser light may be reflected by the interfering object before reaching the measured object. In this case, a large distance measurement error occurs. For ease of understanding, the following continues to describe with reference to FIG. 3.

As shown in FIG. 3, in a rainy day scenario, a rain drop $O_s$ exists between the vehicle $A_3$ and the vehicle $A_4$. If laser light $S_3$ emitted by the laser rangefinder is reflected by the raindrop $O_s$, and a time interval between transmitting the laser light $S_3$ and receiving laser light $S_4$ is $t_2$, it is determined that a vehicle distance $L_4$ between the vehicle $A_3$ and the vehicle $A_4$ is $\frac{C*t_2}{2}$. That is, it is determined that a distance between the vehicle $A_3$ and the raindrop $O_s$ is the vehicle distance between the vehicle $A_3$ and the vehicle $A_4$, thereby causing a large distance measurement error.

3. Monocular distance measurement

The monocular distance measurement is to determine a distance between a shot object and an image shooting component by determining a size of the shot object in an image shot by the image shooting component. The image shooting component may be a visible light image shooting component, for example, a monocular camera.

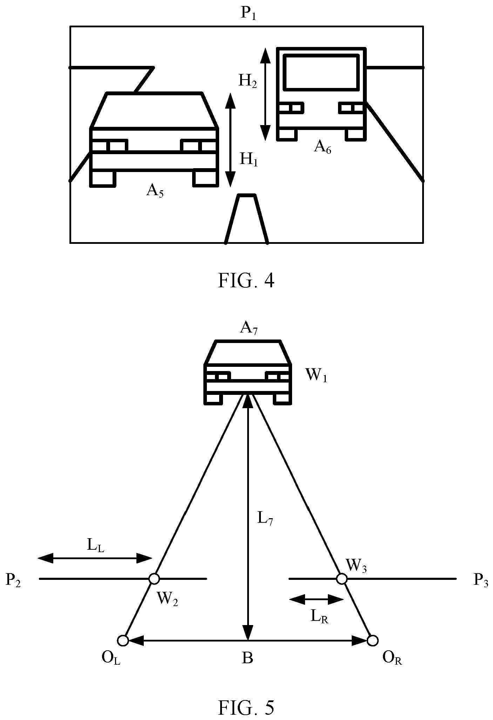

Specifically, a distance measurement apparatus may input, to a neural network for processing, an image shot by the monocular camera, to determine a type of an object in the image, and determine a region of the object in the image. The neural network may be a yolo (you only look once), a faster-region convolutional neural network (faster-region convolutional neural network, faster-RCNN), or the like. The region of the object in the image may be represented by a sampling anchor (anchor) circumscribing the object in the image. The sampling anchor may be a rectangular anchor, a circular anchor, an oval anchor, or the like. This is not limited. In this way, the distance measurement apparatus may determine the size of the object in the image based on the region of the object in the image. For example, the distance measurement apparatus may determine one or more of the following parameters of the sampling anchor of the object: a length, a width, a diameter, a radius, or the like. The foregoing parameters of the sampling anchor may be used to indicate the size of the object in the image. Then, the distance measurement apparatus may determine a real size of the object of this type in a database based on the type of the object. Because a ratio of the size of the object in the image to a focal length of the monocular camera is equal to a ratio of the real size to a real distance, namely, a pinhole imaging principle, the distance measurement apparatus may determine a distance between the object and the monocular camera based on the real size, the focal length of the monocular camera, and the size of the object in the image. For ease of understanding, the following describes the monocular distance measurement with reference to FIG. 4.

FIG. 4 is a schematic diagram of a scenario of monocular distance measurement. As shown in FIG. 4, an image $P_1$ is a monocular image shot by the monocular camera. The distance measurement apparatus may input the image $P_1$ into a neural network for processing, to determine that a type of a vehicle $A_5$ in the image $P_1$ is a car, and determine that a type of a vehicle $A_6$ in the image $P_1$ is a bus. Further, the distance measurement apparatus may further determine that a size of the vehicle $A_5$ in the image $P_1$ is $H_1$, and a size of the vehicle $A_6$ in the image $P_1$ is Hz. In this way, the distance measurement apparatus may determine a real size of the car as $H_1'$ in a database based on the type of the vehicle $A_5$ being the car, and determine a real size of the bus as $H_2'$ in the database based on the type of the vehicle A6 being the bus. If the focal length of the monocular camera is f, the distance measurement apparatus may determine that a distance $L_5$ between the vehicle $A_5$ and the monocular camera is $\dfrac{H_1'*f}{H_1}$, and that a distance $L_6$ between the vehicle $A_6$ and the monocular camera is $\dfrac{H_2'*f}{H_2}$.

Further, it can be learned from the foregoing principle that because the focal length is fixed, accuracy of the monocular distance measurement is affected by a size of an object in an image and a real size. In other words, if a large error exists in the size of the object that is determined by the neural network and that is in the image, or a large error exists between a real size recorded in the database and a real size of the object, a large error exists in distance measurement. For ease of understanding, the following continues to describe with reference to FIG. 4.

As shown in FIG. 4, if an exact size of the vehicle $A_5$ in the image $P_1$ is $h_1$, a distance error $\triangle L_5$ between the vehicle $A_5$ and the image shooting component is $\dfrac{H_1'*f}{H_1} - \dfrac{H_1'*f}{h_1}$. If the real size of the vehicle $A_6$ is $h_2'$, a distance error $\triangle L_6$ between the vehicle $A_6$ and the image shooting component is $\dfrac{H_2'*f}{H_2} - \dfrac{h_2'*f}{H_2}$. In addition, if a distance between the image shooting component and the shot object is longer, the size of the object in the image is further reduced, so that a size error is further aggravated. In other words, when the distance is longer, a monocular distance measurement error is larger.

4. Binocular distance measurement

The binocular distance measurement is to determine a distance between an image shooting component and a shot object by determining a parallax of the object in a binocular image shot by the image shooting component. The image shooting component may be a visible light image shooting component, for example, a multiocular camera.

Specifically, the distance measurement apparatus may separately input binocular images shot by a multiocular camera such as a binocular camera, such as a left-ocular image and a right-ocular image (which may also be an upper-ocular image and a lower-ocular image), into a neural network for processing, to separately determine locations of a shot object in the left-ocular image and the right-ocular image. For example, the distance measurement apparatus may determine the object in the left-ocular image, and determine a left-ocular sampling anchor of the object. Then, the distance measurement apparatus may perform normalized cross correlation (normalized cross correlation, NCC) correlation algorithm matching on the left-ocular image and the right-ocular image, to determine, in the right-ocular image, an object that is the same as that in the left-ocular image, and determine a right-ocular sampling anchor of the object. Certainly, a sequence of determining the object is not limited to from the left-ocular image to the right-ocular image, and may also be from the right-ocular image to the left-ocular image. This is not limited. Then, the distance measurement apparatus may determine that a feature point in the left-ocular sampling anchor is a location of the object in the left-ocular image, and that a feature point in the right-ocular sampling anchor is a location of the object in the right-ocular image. The feature point may be a top corner point, a center point, or the like of a sampling anchor. This is not limited. In addition, a type of the feature point in the left-ocular sampling anchor is consistent with a type of the feature point in the right-ocular sampling anchor. For example, if the feature point in the left-ocular sampling anchor is an upper left corner point of the left-ocular sampling anchor, the feature point in the right-ocular sampling anchor is an upper left corner point of the right-ocular sampling anchor. If the feature point in the left-ocular sampling anchor is a center point of the left-ocular sampling anchor, the feature point in the right-ocular sampling anchor is a center point of the right-ocular sampling anchor.

Further, the distance measurement apparatus may determine a parallax of the shot object in the left-ocular image and the right-ocular image based on the locations of the object in the left-ocular image and the right-ocular image respectively. For example, the distance measurement apparatus may determine a first spacing between a feature point on the left-ocular sampling anchor and a left line of the left-ocular image, determine a second spacing between a feature point on the right-ocular sampling anchor and a left line of the right-ocular image, and determine a difference between the first spacing and the second spacing. The difference may indicate the parallax of the object in the left-ocular image and the right-ocular image. For ease of understanding, the following describes the binocular distance measurement with reference to FIG. 5.

FIG. 5 is a schematic diagram of a scenario of binocular distance measurement. As shown in FIG. 5, an image $P_2$ is a left-ocular image shot by a binocular camera, and an image $P_3$ is a right-ocular image shot by the binocular camera. A location of a vehicle $A_7$ in space is $W_1$. The distance measurement apparatus may input the left-ocular image $P_2$ into a neural network for processing, to determine that a location of the vehicle $A_7$ in the left-ocular image $P_2$ is $W_2$. In addition, the distance measurement apparatus may input the right-ocular image $P_3$ into the neural network for processing, to determine that a location of the vehicle $A_7$ in the image $P_3$ is $W_3$. In this way, the distance measurement apparatus may determine that a distance from the location $W_2$ to an edge of the left-ocular image $P_2$ is $L_L$, and determine that a distance from the location $W_3$ to an edge of the right-ocular image $P_3$ is $L_R$, to determine that a parallax of the vehicle $A_7$ is $L_L - L_R$.

Further, after determining the parallax, the distance measurement apparatus may determine a distance between the binocular camera and the object based on the parallax, a focal length of the binocular camera, and a baseline distance of the binocular camera. The baseline distance is a distance between an optical center of a left-ocular lens of the binocular camera and an optical center of a right-ocular lens of the binocular camera. For ease of understanding, the following continues to describe with reference to FIG. 5.

As shown in FIG. 5, if the baseline distance between the optical center $O_L$ of the left-ocular lens and the optical center $O_R$ of the right-ocular lens is B, and focal lengths of the left-ocular lens and the right-ocular lens are f, the distance measurement apparatus may determine a distance $L_7$ between the vehicle $A_7$ and the binocular camera is $\dfrac{B*f}{L_L - L_R}$.

Further, it can be learned according to the foregoing principle that because the focal length and the baseline distance are fixed, accuracy of the binocular distance measurement is affected by the parallax. In other words, if a large error exists in the parallax determined by the neural network, a large error exists in the binocular distance measurement. For ease of understanding, the following continues to describe with reference to FIG. 5.

As shown in FIG. 5, if an exact parallax of the vehicle $A_7$ is $L_l - L_r$, a distance error $\triangle L_7$ between the vehicle $A_7$ and the binocular camera is $\dfrac{B*f}{L_L - L_R} - \dfrac{B*f}{L_l - L_r}$. In addition, similar to the monocular distance measurement, if a distance between the binocular camera and the shot object is longer, a parallax of the shot object in a binocular image is further reduced, so that a parallax error is further aggravated. In other words, when the distance is longer, a binocular distance measurement error is larger. For example, if the focal length f is 2000, the baseline distance is 0.33 meters, and an actual distance between the binocular camera and the shot object is 200 meters, a parallax error of one pixel leads to a distance measurement error of 60 meters.

Further, it can be learned from the foregoing description that, no matter which distance measurement technology is used, each distance measurement is easily interfered by the foregoing factors. As a result, continuous distance measurement lacks stability, and the distance measurement fluctuates greatly. As a result, a collision risk cannot be accurately evaluated, and a collision cannot be effectively avoided. For example, for the monocular distance measurement or the binocular distance measurement, if an image shot at a previous moment is clear, the distance measurement apparatus can accurately determine a distance between a shot object and an image shooting component at the previous moment. If the image shot at a next moment is blurry, the distance measurement apparatus may not accurately determine a distance between the object and the image shooting component at the next moment. As a result, distances measured at the two moments fluctuate greatly, and a collision risk cannot be accurately evaluated, and a collision cannot be effectively avoided. For another example, for the laser distance measurement, if no interfering object exists between two adjacent objects at a previous moment, a laser rangefinder can accurately determine a distance between the two objects at the previous moment. If an interfering object exists between the two adjacent objects at a next moment, the laser rangefinder may not accurately determine a distance between the two objects at the next moment, and consequently, distances measured at the two moments fluctuate greatly, thereby failing to reduce a collision risk.

To resolve the foregoing problem, embodiments of this application provide a distance measurement method and apparatus, to improve distance measurement stability and reduce distance measurement fluctuation, thereby effectively reducing a collision risk.

The following describes technical solutions of this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "for example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized.

In embodiments of this application, sometimes a subscript such as $W_1$ may be written in an incorrect form such as W1. Expressed meanings are consistent when differences between them are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

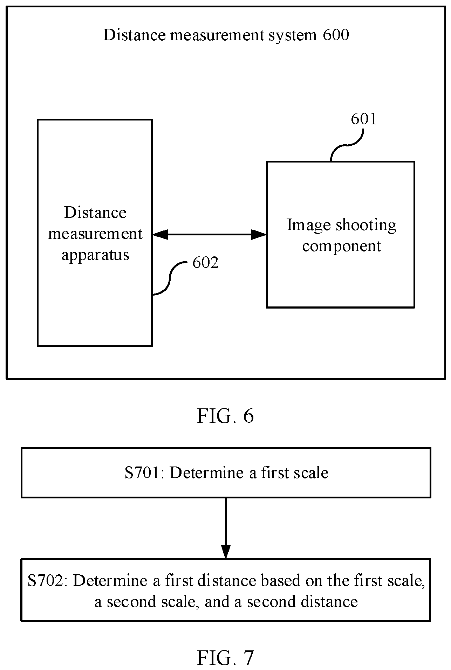

For ease of understanding of embodiments of this application, a distance measurement system applicable to embodiments of this application is first described in detail by using a distance measurement system shown in FIG. 6 as an example. For example, FIG. 6 is a schematic diagram of an architecture of a distance measurement system to which the distance measurement system is applicable according to an embodiment of this application.

As shown in FIG. 6, the distance measurement system 600 includes an image shooting component 601 and a distance measurement apparatus 602.

The image shooting component 601 may include a visible light image shooting component, such as a monocular camera and/or a multiocular camera. A lens of the monocular camera may be a zoom or fixed-focus wide-angle lens, a medium-focus lens, a long-focus lens, or the like. This is not limited. The multiocular camera may be a binocular camera, a trinocular camera, a quadocular camera, and the like. Lenses of the multiocular camera may also be zoom or fixed-focus wide-angle lenses, medium-focus lenses, long-focus lenses, or the like. This is not limited.

The distance measurement apparatus 602 may be a terminal device, for example, a terminal having a transceiver function, or may be a chip or a chip system disposed in the terminal, that is, the terminal device includes the distance measurement apparatus, or may be an apparatus including a terminal device. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an RSU having a terminal function, a vehicle such as a vehicle, a ship, or a train, an aircraft such as an airplane, a rocket, a spaceship, or a satellite, and the like. Alternatively, the terminal device in this application may be used as one or more parts or units built in the vehicle or the aircraft. For example, the parts or units may be a vehicle-mounted terminal, a vehicle-mounted module, a vehicle-mounted module, a vehicle-mounted part, a vehicle-mounted chip, or a vehicle-mounted unit, and may also be a flight control terminal, a flight control module, a flight control module, a flight control part, a flight control chip or a flight control unit.

Further, when an object, for example, a pedestrian or a vehicle, enters a shooting range of the image shooting component 601, the image shooting component 601 may continuously shoot the object, to continuously obtain images of the object. Correspondingly, the distance measurement apparatus 602 may determine, based on an image shot at a previous moment and an image shot at a next moment, a scale variation of the object in the two images, namely, a scale variation from the previous moment to the next moment. In this way, the distance measurement apparatus 602 may determine, based on the scale variation from the previous moment to the next moment and a distance between the object and the image shooting component 601 at the previous moment, a distance between the object and the image shooting component 601 at the next moment. Then, the distance measurement apparatus 602 may continue to determine, based on the image shot at the previous moment and an image shot at a moment after the next moment, or based on the image shot at the next moment and an image shot at a moment after the next moment, a scale variation of the object in two images, namely, a scale variation from the next moment to the moment after the next moment. In this way, the distance measurement apparatus 602 may iteratively determine, based on the scale variation from the next moment to the moment after the next moment, and based on a distance between the object and the image shooting component 601 at the previous moment or the next moment, may iteratively determine a distance between the object and the image shooting component 601 at the moment after the next moment, and the like, to perform tracking and distance measurement on the object until the object leaves the shooting range of the image shooting component 601.

Optionally, the image shooting component may further include a laser image shooting component, such as a laser rangefinder (not shown in FIG. 6). The laser image shooting component and the foregoing visible light image shooting component may be installed at a same location, so that the distance measurement apparatus 602 may more accurately determine, with assistance of the laser image shooting component, a distance between the object and the image shooting component 601.

For ease of understanding, in the following method embodiments, in this application, shooting at two moments, for example, shooting at a first moment and a second moment, is used as an example to specifically describe a principle of tracking and distance measurement.

It should be noted that, the solutions in embodiments of this application may also be used in another distance measurement system, and a corresponding name may also be replaced with a name of a corresponding function in the another distance measurement system.

It should be understood that FIG. 6 is merely a simplified schematic diagram of an example for ease of understanding. The distance measurement system may further include another image shooting component and/or another distance measurement apparatus, which is not shown in FIG. 6.

The following describes in detail the distance measurement method provided in embodiments of this application with reference to FIG. 7 to FIG. 13.

For example, FIG. 7 is a schematic flowchart of a distance measurement method according to an embodiment of this application. The distance measurement method may be applicable to the distance measurement apparatus shown in FIG. 6.

For ease of understanding, two moments are used as an example for description in this embodiment.

As shown in FIG. 7, the distance measurement method includes the following steps.

S701: Determine a first scale.

The first scale may be a scale of a first object in a first image, and indicates a size of the first object in the first image, to reflect a distance between the first object and an image shooting component. For example, a shorter distance between the first object and the image shooting component indicates a larger first object in the first image shot by the image shooting component, and correspondingly, a larger first scale. Conversely, a longer distance between the first object and the image shooting component indicates a smaller first object in the first image, and correspondingly, a smaller first scale. In addition, for an image in which the first object appears for the first time, namely, a first-frame image, a scale of the first object in the image may be set to a preset value, for example, 1, so that a scale variation of the first object may be iteratively calculated subsequently based on the preset value.

The first object may be various objects in an actual application scenario, for example, a pedestrian, a vehicle, a tree, a street lamp, a pole, or a building. This is not limited. The first image may be a monocular image and/or a multiocular image that are/is shot at a moment, for example, a first moment, and that are/is in images shot by the image shooting component at a plurality of consecutive moments. For example, if the image shooting component includes a monocular camera, the first image may be a monocular image, that is, the first image may be an image shot by a long-focus lens at the first moment, to ensure that imaging of the first object in the first image is large enough. For another example, if the image shooting component includes a multiocular camera, the first image may be a multiocular image, such as a binocular image, a trinocular image, or a quadocular image. That is, the first image may be a plurality of images shot at the first moment. For another example, if the image shooting component includes a monocular camera and a multiocular camera, the first image may be correspondingly a monocular image and/or a multiocular image.

Further, the first scale may be determined by the distance measurement apparatus based on a second scale and a scale change amount.

Similar to the first scale, the second scale may be a scale of the first object in a second image, and indicates a size of the first object in the second image, to reflect a distance between the first object and the image shooting component. For example, a shorter distance between the first object and the image shooting component indicates a larger first object in the second image shot by the image shooting component, and correspondingly, a larger second scale. Conversely, a longer distance between the first object and the image shooting component indicates a smaller first object in the second image, and correspondingly, a smaller second scale. The second image may be an image that is shot at a moment before the first moment, for example, a second moment, and that is in images shot by the image shooting component at the plurality of moments. In other words, for the first object, the image shooting component first shoots the second image, and then shoots the first image. In addition, the first image and the second image may be images of adjacent frames, or may be images of spaced frames, and a quantity of frames between the first image and the second image may be selected based on an actual situation. This is not limited. In addition, to ensure that the distance measurement apparatus can accurately determine the scale change amount, the first image and the second image are of the same type, to be specific, if the second image is a monocular image, the first image is correspondingly a monocular image, or if the second image is a multiocular image, the first image is also correspondingly a multiocular image.

The scale change amount may indicate a scale variation between the first scale and the second scale, and may be determined by the distance measurement apparatus based on a location relationship between a first contour point and a second contour point.

A contour of the first object in the second image may be a second contour. The second contour point may be determined from a second region of the second image, and may be a contour point on the second contour. For example, the second contour point may be all pixels on the second contour, so that a quantity of samples subsequently used to calculate the scale change amount is sufficient, to ensure that the calculated scale change amount is accurate enough. Alternatively, the second contour point may also be some pixels on the second contour, for example, pixels on a horizontal line and/or a vertical line in the second contour, to reduce an operation amount for subsequently calculating the scale change amount and improve processing efficiency.

A contour of the first object in the first image may be a first contour. The first contour point may be determined from a first region of the first image, and is a pixel that corresponds to a location of the second contour point and that is on the first contour. For example, if the first contour point is a pixel at an upper left corner of the first contour, the second contour point is a pixel at an upper left corner of the second contour. For another example, if the first contour point is a pixel at a lower right corner of the first contour, the second contour point is a pixel at a lower right corner of the second contour. That is, the first contour point and the second contour point are pixels that are of a same location on the first object and that are respectively in the first image and the second image.

For ease of understanding, how the distance measurement apparatus determines the first contour point and the second contour point is specifically described below by using an example in which the second image is an image in which the first object appears for the first time.

Specifically, because the second image includes the first object, and may further include another object such as a second object, a third object, and a fourth object, the distance measurement apparatus may determine the first object from one or more objects in the second image, to avoid a matching error caused by subsequently using a contour of another object for contour point matching of the first object, and ensure distance measurement accuracy. For example, the distance measurement apparatus may input the second image to a neural network for processing, to identify each object in the second image, and determine a region of each object in the second image, namely, a sampling anchor of each object. Then, the distance measurement apparatus may label each object, to identify the first object, to determine the first object from the second image. A region of the first object in the second image is the second region. In this way, the distance measurement apparatus may determine the second contour point of the first object from the second region by using an image edge extraction algorithm. For example, the distance measurement apparatus may perform gray-scale processing on the second region by using the image edge extraction algorithm, to obtain a gray-scaled second region. In the gray-scaled second region, a grayscale difference between a pixel on the second contour of the first object and a pixel on a non-second contour of the first object is large. Therefore, the distance measurement apparatus may determine the second contour point of the first object by determining a grayscale difference between pixels in the second region by using the image edge extraction algorithm.

For ease of understanding, the following specifically describes, by using an example, how to determine the first contour point and the second contour point.

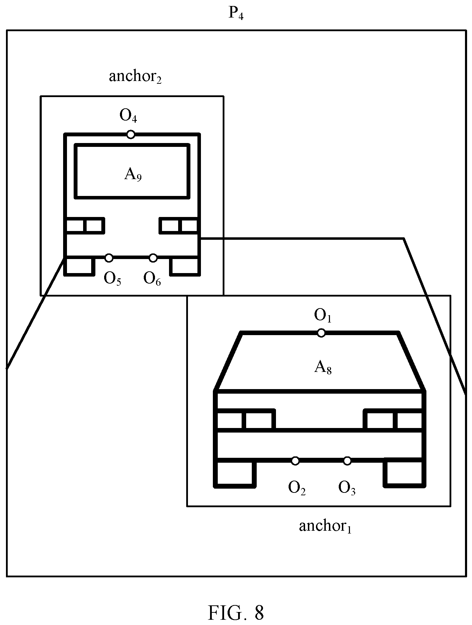

For example, FIG. 8 is a schematic diagram of a second image before projection. As shown in FIG. 8, a second image $P_4$ includes a vehicle $A_8$ and a vehicle $A_9$. The distance measurement apparatus may input the second image

$P_4$ to the neural network for processing, to identify the vehicle $A_8$ and the vehicle $A_9$, and determine a sampling anchor $anchor_1$ of the vehicle $A_8$ and a sampling anchor $anchor_2$ of the vehicle $A_9$. Then, the distance measurement apparatus may label the vehicle $A_8$ and the vehicle $A_9$ to identify the vehicle $A_8$ as a first object and the vehicle $A_9$ as a second object. In this way, the distance measurement apparatus may determine second contour points of the vehicle $A_8$ from the sampling anchor $anchor_1$, which are respectively a second contour point $O_1$, a second contour point $O_2$, and a second contour point $O_3$, and determine second contour points of the vehicle $A_9$ from the sampling anchor $anchor_2$, which are respectively a second contour point $O_4$, a second contour point $O_5$, and a second contour point Oe.

Similarly, the distance measurement apparatus may alternatively input the first image to the neural network for processing, to determine a region, in the first image, of each object in the first image. In this way, the distance measurement apparatus may also determine a contour point of the first object from the region in which each obj ect is located by using the image edge extraction algorithm.

For ease of understanding, the following continues to use the foregoing example for description.

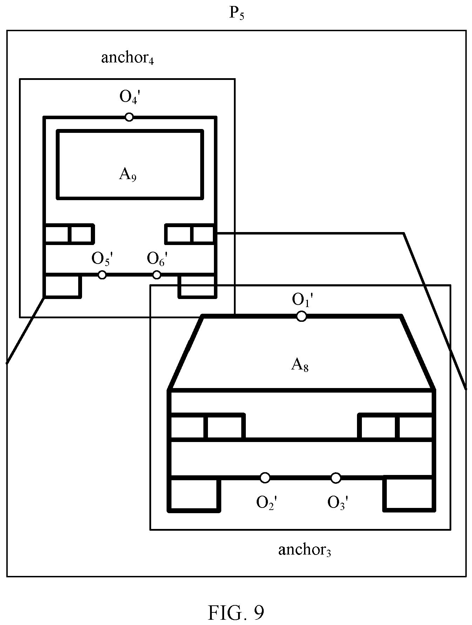

For example, FIG. 9 is a schematic diagram of a first image. As shown in FIG. 9, a first image $P_5$ also includes the vehicle $A_8$ and the vehicle $A_9$. The distance measurement apparatus may input the first image $P_5$ to the neural network for processing, to identify the vehicle $A_8$ and the vehicle $A_9$, and determine a sampling anchor $anchor_3$ of the vehicle $A_8$ and a sampling anchor $anchor_4$ of the vehicle $A_9$. In this way, the distance measurement apparatus may determine contour points of the vehicle $A_8$ from the sampling anchor $anchor_3$, which are respectively a contour point $O_1'$, a contour point $O_2'$, and a contour point $O_3'$, and determine contour points of the vehicle $A_9$ from the sampling anchor $anchor_4$, which respectively are a contour point $O_4'$, a contour point $O_5'$, and a contour point $O_6'$.

Further, the distance measurement apparatus may project a contour point of each object in the first image to the second image, and calculate a location relationship between the second contour point and these projected contour points by using a predefined algorithm, such as an iterative closest point (iterative closest point, ICP) algorithm, thereby determining a contour point corresponding to the location of the second contour point, namely, the first contour point. In this way, the distance measurement apparatus may determine that an object corresponding to the first contour point in the first image is the first object, and a region of the first object in the first image is the first region.

It should be understood that, because the distance between the first object and the image shooting component gradually changes, there is no great difference between a contour of the first object in the first image and a contour of the first object in the second image. In other words, among contours of all objects in the first image, the first contour of the first object is closest to the second contour in the second image. In this way, the contour point that is corresponding to the second contour point and that is determined by using the ICP algorithm is the first contour point of the first object, to identify the first object from one or more objects in the first image. That is, after actively identifying, in the first-frame image, which object is the first object, the distance measurement apparatus subsequently calculates a location relationship between contour points by using the ICP algorithm to implement tracking and identification of the first object.

For ease of understanding, the following continues to use the foregoing example for description.

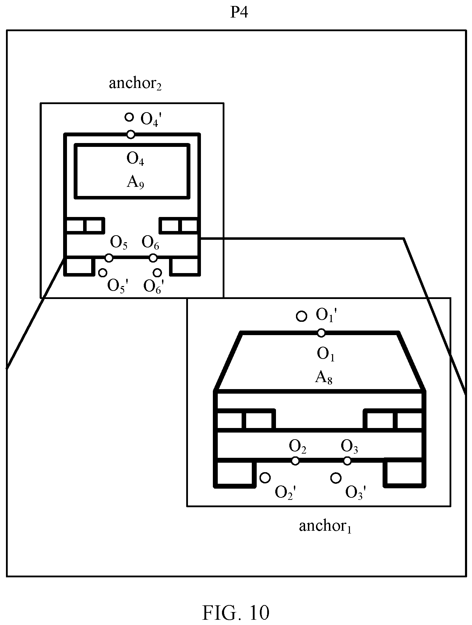

For example, FIG. 10 is a schematic diagram of a second image after projection. As shown in FIG. 10, the contour point $O_1'$ to the contour point $O_6'$ in FIG. 10 are contour points determined by projecting the contour point $O_1'$ to the contour point $O_6'$ in FIG. 9. The distance measurement apparatus may determine, by calculating a location relationship between the contour point $O_1'$ to the contour point $O_6'$ and the second contour point $O_1$ to the second contour point $O_3$ by using the ICP algorithm, that a first contour point corresponding to the second contour point $O_1$ is the contour point $O_1'$, a first contour point corresponding to the second contour point $O_2$ is the contour point $O_2'$, and a first contour point corresponding to the second contour point $O_3$ is the contour point $O_3'$. That is, a difference between a contour of the vehicle $A_8$ in the first image $P_5$ and a contour of the vehicle $A_8$ in the second image $P_4$ is the smallest. In this way, the distance measurement apparatus may determine the vehicle $A_8$ in the first image $P_5$ as the first object based on a correspondence between the contour point $O_1'$ to the contour point $O_3'$ and the second contour point $O_1$ to the second contour point $O_3$, to track and identify the first object. Similarly, the distance measurement apparatus may determine, by calculating a location relationship between the contour point $O_1'$ to the contour point $O_6'$ and the second contour point $O_4$ to the second contour point $O_6$ by using the ICP algorithm, that a first contour point corresponding to the second contour point $O_4$ is the contour point $O_4'$, a first contour point corresponding to the second contour point $O_5$ is the contour point $O_5'$, and a first contour point corresponding to the second contour point $O_6$ is the contour point Oe'. That is, a difference between a contour of the vehicle $A_9$ in the first image $P_5$ and a contour of the vehicle $A_9$ in the second image $P_4$ is the smallest. In this way, the distance measurement apparatus may alternatively determine the vehicle $A_9$ in the first image $P_5$ as the second object based on a correspondence between the contour point $O_4'$ to the contour point $O_6'$ and the second contour point $O_4$ to the second contour point $O_6$, to track and identify the second obj ect.

It should be understood that the foregoing manner of determining the first contour point and the second contour point is merely an example manner, and is not intended as a limitation. For example, before calculating the distance between the contour points by using the ICP algorithm, the distance measurement apparatus may further perform interpolation on the first image and the second image, for example, perform sub-pixel level interpolation on the first image and the second image by using an interpolation method or fitting, to improve resolution of the first image and the second image, and increase a quantity of samples of the first contour point and the second contour point, so that a quantity of samples subsequently used to calculate a scale change amount is sufficient. In this way, it is ensured that the calculated scale change amount is accurate enough.

It should be further understood that, because a change of a contour size of the first object in an image may accurately reflect a scale variation of the first object in the image, and a change of a contour point location may accurately reflect the change of the contour size, the distance measurement apparatus may accurately determine the scale change amount based on a location relationship between the first contour point and the second contour point.

Further, after determining the first contour point and the second contour point, the distance measurement apparatus may determine the scale change amount based on the location relationship between the first contour point and the second contour point.

Because the distance between the first object and the image shooting component changes, a contour of the first object in the image is proportionally scaled up or scaled down, and the contour is proportionally scaled up or scaled down, so that the first contour point forms a location difference in an x-axis direction and a y-axis direction compared with the second contour point. The location difference in the x direction may reflect a scale change amount between the first scale and the second scale in the x-axis direction, and the location difference in the y direction may reflect a scale change amount between the first scale and the second scale in the y-axis direction. That is, the scale change amount between the first scale and the second scale may be the scale change amount in the x-axis direction, the scale change amount in the y-axis direction, or a weighted sum of the scale change amount in the x-axis direction and the scale change amount in the y-axis direction, so that in practice, a scale change amount that is more suitable for an actual situation may be selected.

Specifically, a linear relationship between locations of the first contour point and the second contour point and the scale change amount in the x-axis direction, and a linear relationship between the locations of the first contour point and the second contour point and the scale change amount in the y-axis direction may be shown in the following formula (1):

$$\begin{cases} x_t = s_{t-i}^x * x_{t-i} + d_{t-i}^x \\ y_t = s_{t-i}^y * y_{t-i} + d_{t-i}^y \end{cases} \quad (1)$$

Here, t is a positive integer, t is used to represent a first moment, i is a positive integer less than or equal to t, t-i is used to represent a second moment, $(x_t, y_t)$ is used to represent a location of the first contour point, $(x_{t-i}, y_{t-i})$ is used to represent a location of the second contour point, $s_{t-i}^x$ is the scale change amount in the x-axis direction, $s_{t-i}^y$ is the scale change amount in the y-axis direction, and $d_{t-i}^x$ and $d_{t-i}^y$ are compensation values. The compensation value is also an unknown variable in the formula (1), and may be determined by using the formula (1).

Further, because a quantity of first contour points and a quantity of second contour points are both greater than one, for example, are n, and n is an integer greater than 1, the formula (1) may be simultaneous equations, which may be shown in the following formula (2) and formula (3):

$$\begin{cases} x_t^1 = s_{t-i}^x * x_{t-i}^1 + d_{t-i}^x \\ x_t^2 = s_{t-i}^x * x_{t-i}^2 + d_{t-i}^x \\ \quad ... \\ x_t^n = s_{t-i}^x * x_{t-i}^n + d_{t-i}^x \end{cases} \quad (2)$$

$$\begin{cases} y_t^1 = s_{t-i}^y * y_{t-i}^1 + d_{t-i}^y \\ y_t^2 = s_{t-i}^y * y_{t-i}^2 + d_{t-i}^y \\ \quad ... \\ y_t^n = s_{t-i}^y * y_{t-i}^n + d_{t-i}^y \end{cases} \quad (3)$$

Further, the formula (2) and the formula (3) are represented in a matrix form, and may be shown in the following formula (4) and formula (5):

$$\begin{bmatrix} x_t^1 & 1 \\ x_t^2 & 1 \\ \cdots & \cdots \\ x_t^n & 1 \end{bmatrix} * \begin{bmatrix} s_{t-i}^x \\ d_{t-i}^x \end{bmatrix} = \begin{bmatrix} x_{t-i}^1 \\ x_{t-i}^2 \\ \cdots \\ x_{t-i}^n \end{bmatrix} \quad (4)$$

$$\begin{bmatrix} y_t^1 & 1 \\ y_t^2 & 1 \\ \cdots & \cdots \\ y_t^n & 1 \end{bmatrix} * \begin{bmatrix} s_{t-i}^y \\ d_{t-i}^y \end{bmatrix} = \begin{bmatrix} y_{t-i}^1 \\ y_{t-i}^2 \\ \cdots \\ y_{t-i}^n \end{bmatrix} \quad (5)$$

If it is assumed that $A = \begin{bmatrix} x_t^1 & 1 \\ x_t^2 & 1 \\ \cdots & \cdots \\ x_t^n & 1 \end{bmatrix}$, $a = \begin{bmatrix} x_{t-i}^1 \\ x_{t-i}^2 \\ \cdots \\ x_{t-i}^n \end{bmatrix}$, $B = \begin{bmatrix} y_t^1 & 1 \\ y_t^2 & 1 \\ \cdots & \cdots \\ y_t^n & 1 \end{bmatrix}$, and $b = \begin{bmatrix} y_{t-i}^1 \\ y_{t-i}^2 \\ \cdots \\ y_{t-i}^n \end{bmatrix}$, a relationship between $A$ and $a$ and $\begin{bmatrix} s_{t-i}^x \\ d_{t-i}^x \end{bmatrix}$ may be shown in the following formula (6), and a relationship between $B$ and $b$ and $\begin{bmatrix} s_{t-i}^y \\ d_{t-i}^y \end{bmatrix}$ may be shown in the following formula (7):

$$\begin{bmatrix} s_{t-i}^x \\ d_{t-i}^x \end{bmatrix} \approx (A^T A)^{-1} A^T a \quad (6)$$

$$\begin{bmatrix} s_{t-i}^y \\ d_{t-i}^x \end{bmatrix} \approx (B^T B)^{-1} B^T b \quad (7)$$

In this way, the distance measurement apparatus may determine the scale change amount in the x-axis direction according to the Formula (6), and may determine the scale change amount in the y-axis direction according to the Formula (7). If the distance between the first object and the image shooting component is decreasing, that is, a contour of the first object is proportionally scaled up, the determined scale change amount may be greater than 1. On the contrary, if the distance between the first object and the image shooting component is increasing, that is, the contour of the first object is scaled down in a same proportion, the determined scale change amount may be less than 1.

It should be understood that if the first image and the second image are images shot by a monocular camera, for example, a long-focus lens, imaging of the first object in the first image and the second image is large, and the quantity of first contour points and the quantity of second contour points are also large. Therefore, the determined scale change amount is also accurate. In addition, it can be learned from the foregoing description of the first image and the second image that, if there are a plurality of first images and a plurality of second images, the distance measurement apparatus may correspondingly determine a plurality of scale change amounts based on the plurality of first images and each of second images respectively corresponding to the plurality of first images. Then, the distance measurement apparatus may perform weighted summation on the plurality of scale change amounts to determine a final scale change amount.

Further, because the scale change amount may represent a scale variation between the first scale and the second scale, after determining the scale change amount, the distance measurement apparatus may iteratively determine the first scale based on the second scale and the scale change amount. For example, a product of or a difference between the second scale and the scale change amount is determined as the first scale. It can be learned from the foregoing description of the scale that if the second image is an image in which the first object appears for the first time, namely, a first-frame image in the plurality of images, the second scale may be a preset value. Conversely, if the second image is not the image in which the first object appears for the first time, namely, a non-first-frame image in the plurality of images, the second scale may be determined by the distance measurement apparatus in an iterative manner. A principle of iteratively determining the second scale is the same as a principle of determining the first scale. Details are not described herein again.

For ease of understanding, the following continues to describe the foregoing example.

For the vehicle $A_8$, if the second contour point $O_1$ is $(x_1, y_1)$, the second contour point $O_2$ is $(x_2, y_2)$, the second contour point $O_3$ is $(x_3, y_3)$, the contour point $O_1'$ is $(x_1', y_1')$, the contour point $O_2'$ is $(x_2', y_2')$, and the contour point $O_3'$ is $(x_3', y_3')$, three simultaneous equations are shown in the following formula (8):

$$\begin{cases} x_1 = s^x_{t-i} * x_1' + d^x_{t-i} \\ y_1 = s^y_{t-i} * y_1' + d^y_{t-i} \end{cases}$$

$$\begin{cases} x_2 = s^x_{t-i} * x_2' + d^x_{t-i} \\ y_2 = s^y_{t-i} * y_2' + d^y_{t-i} \end{cases} \quad (8)$$

$$\begin{cases} x_3 = s^x_{t-i} * x_3' + d^x_{t-i} \\ y_3 = s^y_{t-i} * y_3' + d^y_{t-i} \end{cases}$$

In this way, the distance measurement apparatus calculates the three simultaneous equations, to determine the scale change amount $s^x_{t-i}$ in the x-axis direction, where for example, the scale change amount is 1.2; and determine the scale change amount $s^y_{t-i}$ in the y-axis direction, where for example, the scale change amount is 1.16. Alternatively, when weights of the scale change amount $s^x_{t-i}$ in the x-axis direction and the scale change amount $s^y_{t-i}$ in the y-axis direction are both 0.5, the distance measurement apparatus may determine a weighted sum value of $s^x_{t-i}$ and $s^y_{t-i}$, where for example, the weighted sum value is 1.18. Further, if the second scale $S_{t-i}$ is 1, the distance measurement apparatus may determine that a first scale $S_t$ of the vehicle $A_8$ in the first image $P_4$ may be 1 × 1.2 = 1.2, or may be 1 × 1.16 = 1.16, or may be 1 × 1.18 = 1.18.

For the vehicle $A_9$, if the second contour point $O_4$ is $(x_4, y_4)$, the second contour point $O_5$ is $(x_5, y_5)$, the second contour point $O_6$ is $(x_6, y_6)$, the contour point $O_4'$ is $(x_4', y_4')$, the contour point $O_5'$ is $(x_5', y_5')$, and the contour point $O_6'$ is $(x_6', y_6')$, three simultaneous equations are shown in the following formula (9):

$$\begin{cases} x_4 = s^x_{t-i} * x_4' + d^x_{t-i} \\ y_4 = s^y_{t-i} * y_4' + d^y_{t-i} \end{cases}$$

$$\begin{cases} x_5 = s^x_{t-i} * x_5' + d^x_{t-i} \\ y_5 = s^y_{t-i} * y_5' + d^y_{t-i} \end{cases} \quad (9)$$

$$\begin{cases} x_6 = s^x_{t-i} * x_6' + d^x_{t-i} \\ y_6 = s^y_{t-i} * y_6' + d^y_{t-i} \end{cases}$$

In this way, the distance measurement apparatus calculates the three simultaneous equations, to determine the scale change amount $s^x_{t-i}$ in the x-axis direction, where for example, the scale change amount is 1.3; and determine the scale change amount $s^y_{t-i}$ in the y-axis direction, where for example, the scale change amount is 1.24. Alternatively, when the weights of the scale change amount $s^x_{t-i}$ in the x-axis direction and the scale change amount $s^y_{t-i}$ in the y-axis direction are both 0.5, the distance measurement apparatus may determine the weighted sum value of $s^x_{t-i}$ and

$s_{t-i}^{y}$, where for example, the weighted sum value is 1.26. Further, if the second scale $S_{t-i}$ is 0.8, the distance measurement apparatus may determine that a first scale $S_t$ of the vehicle $A_9$ in the first image $P_4$ may be 0.8 x 1.3 = 1.04, or may be 0.8 x 1.24 = 0.992, or may be 0.8 x 1.26 = 1.008.

S702: Determine a first distance based on the first scale, the second scale, and a second distance.

The second distance may be a distance between the first object and the image shooting component at the second moment, and may be determined through measurement by a laser rangefinder, or may be determined by the distance measurement apparatus based on a fourth image shot by a monocular camera and/or a multiocular camera at the second moment. The fourth image and the second image may be a same image or two different images. For example, if the second image is an image shot by a monocular camera at the second moment, and the fourth image may be an image shot by a multiocular camera at the second moment, the fourth image and the second image are two different images. For another example, if both the second image and the fourth image are an image shot by a multiocular camera at the second moment, the fourth image and the second image are a same image. It should be understood that, because both the fourth image and the second image are an image shot at the second moment, when the second image is an image in which the first object appears for the first time, the fourth image is also the image in which the first object appears for the first time.

For ease of understanding, the following separately describes in detail that the distance measurement apparatus determines the second distance based on the fourth image, and determines the second distance based on the measurement performed by the laser rangefinder.

A. Determine the second distance based on the fourth image

In a possible design solution, if the fourth image is a monocular image, the distance measurement apparatus may determine the second distance through monocular distance measurement.

If the fourth image and the second image are a same image, it can be learned from the foregoing description of the ICP algorithm that the distance measurement apparatus may identify the first object in the fourth image. In this way, the distance measurement apparatus may perform monocular distance measurement on the first object in the fourth image, thereby determining the second distance. For specific implementation of the monocular distance measurement, refer to the related description in "3. Monocular distance measurement". Details are not described herein again.

If the fourth image and the second image are two different images, when the first object in the second image has been identified, the distance measurement apparatus may determine, from one or more objects in the fourth image, which object is the first object. For example, the distance measurement apparatus may first perform monocular distance measurement on each object in the fourth image, to determine a distance between each object in the fourth image and the image shooting component. For specific implementation of the monocular distance measurement, refer to the related description in "3. Monocular distance measurement". Details are not described herein again. Then, the distance measurement apparatus may determine the first object from the fourth image based on the distance between each object in the fourth image and the image shooting component and based on a spatial projection relationship between the fourth image and the second image, to determine the second distance from one or more distances obtained through measurement by using the monocular distance measurement.

Specifically, because each object in the fourth image may be located in a corresponding region in the fourth image, namely, a sampling anchor of each object, the distance measurement apparatus may project each region into the second image through spatial projection, to generate a corresponding second projection region in the second image. For example, the distance measurement apparatus may project, based on the distance between each object in the fourth image and the image shooting component, a region in which each object in the fourth image is located into space, to determine a spatial region that may be occupied by each object.

For ease of understanding, the following uses a rectangular sampling anchor as an example to specifically describe the foregoing spatial projection.

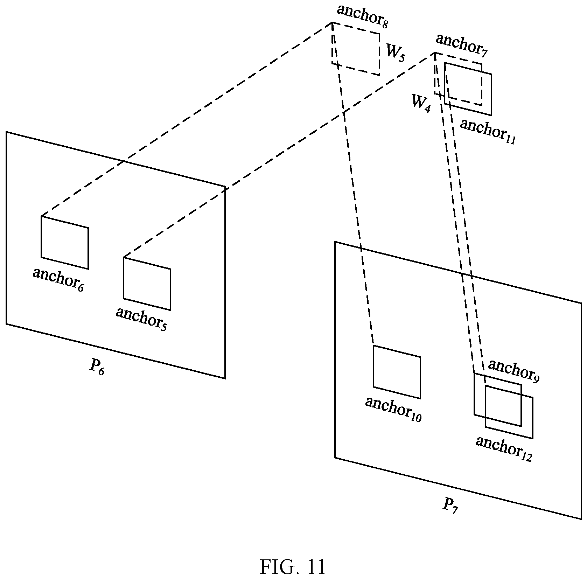

For example, FIG. 11 is a schematic diagram of a first scenario of spatial projection. As shown in FIG. 11, there are sampling anchors of two objects in a fourth image $P_6$: a sampling anchor $anchor_5$ of an object $D_1$ (not shown in FIG. 11) and a sampling anchor $anchor_6$ of an object $D_2$ (not shown in FIG. 11). If the distance measurement apparatus determines that a distance between the object $D_1$ and the image shooting component is $L_8$, the distance measurement apparatus may project the sampling anchor $anchor_5$ into space based on the distance $L_8$. Therefore, it is determined that a spatial sampling anchor $anchor_7$ (shown by a dashed line in FIG. 11) is located in a region $W_4$ in space, and the region $W_4$ in which the spatial sampling anchor $anchor_7$ is located is a spatial region that may be occupied by the object $D_1$. Similarly, if the distance measurement apparatus determines that a distance between the object $D_2$ and the image shooting component is $L_9$, the distance measurement apparatus may project the sampling anchor $anchor_6$ into space based on the distance $L_9$. Therefore, it is determined that a spatial sampling anchor $anchor_8$ (shown by a dashed line in FIG. 11) is located in a region $W_5$ in space, and the region $W_5$ in which the spatial sampling anchor $anchor_8$ is located is a spatial region that may be occupied by the object $D_2$.

Further, the distance measurement apparatus may determine imaging, in the second image, of a spatial region that may be occupied by each object, where a region in which imaging is located is the second projection region. It should be understood that, because the distance that is between each object and the image shooting component and that is determined by the distance measurement apparatus based on the fourth image is accurate, a degree of overlap between the spatial region that is determined by the distance measurement apparatus and that may be occupied by the object and a spatial region actually occupied by the object is also high. In this way, a degree of overlap between imaging, in the second image, of the spatial region that may be occupied by each object and imaging, in the second image, of the spatial region that is actually occupied by each object is also high. Based on this principle, if the first object is located in a fourth region in the second image, the distance measurement apparatus may determine, from the second image, the second projection region whose degree of overlap with the fourth region is greater than an overlap degree threshold. The overlap degree threshold may be 70%, 80%, 90%, or the like. In this way, a region, in the fourth image, corresponding to the second projection region whose degree of overlap is greater than the overlap degree threshold, is a region of the first object in the third image. Therefore, the first object is determined from the fourth image, and the second distance is determined.

For ease of understanding, the following continues to use a rectangular sampling anchor as an example to specifically describe the foregoing spatial projection.

As shown in FIG. 11, the distance measurement apparatus may determine, according to an imaging principle of a monocular camera and/or a binocular camera, that imaging of the spatial sampling anchor $anchor_7$ in the second image $P_7$ is a projection sampling anchor $anchor_9$, and determine that imaging of the spatial sampling anchor $anchor_8$ in the second image $P_7$ is a projection sampling anchor $anchor_{10}$. Further, if the spatial region actually occupied by the first object is a region (shown by a solid line in FIG. 11) in which a sampling anchor $anchor_{11}$ is located, imaging of the sampling anchor $anchor_{11}$ in the second image $P_7$ may be a sampling anchor $anchor_{12}$. Apparently, in the projection sampling anchor $anchor_9$ and the projection sampling anchor $anchor_{10}$, a degree of overlap between the projection sampling anchor $anchor_9$ and the sampling anchor $anchor_{12}$ is greater than the overlap degree threshold. In this case, the distance measurement apparatus may determine that the object $D_1$ in the sampling anchor $anchor_5$ corresponding to the projection sampling anchor $anchor_{10}$ is the first object, and the distance $L_8$ is the second distance.

In another possible design solution, if the fourth image is a multiocular image, the distance measurement apparatus may determine the second distance through binocular distance measurement.

If the fourth image and the second image are a same image, it can be learned from the foregoing description of the ICP algorithm that the distance measurement apparatus may identify the first object in the fourth image. In this way, the distance measurement apparatus may perform binocular distance measurement on the first object in the fourth image, thereby determining the second distance. For specific implementation of the binocular distance measurement, refer to the related description in "4. Binocular distance measurement". Details are not described herein again.

If the fourth image and the second image are two different images, when the first object in the second image has been identified, the distance measurement apparatus may determine, from one or more objects in the fourth image, which object is the first object. For example, the distance measurement apparatus may first perform binocular distance measurement on each object in the fourth image, to determine a distance between each object in the fourth image and the image shooting component. For specific implementation of the binocular distance measurement, also refer to the related description in "4. Binocular distance measurement". Details are not described herein again. Then, the distance measurement apparatus may also determine the first object from the fourth image based on the distance between each object in the fourth image and the image shooting component and based on a spatial projection relationship between the fourth image and the second image, to determine the second distance from one or more distances obtained through measurement by using the binocular distance measurement. For a specific implementation of determining the second distance based on the spatial projection relationship between the fourth image and the second image, refer to the related description in "determining the second distance through monocular distance measurement". Details are not described herein again.

B. Determine the second distance based on a measurement of the laser rangefinder

The laser rangefinder may measure distances between one or more surrounding objects and the image shooting component. That is, there may be one or more distances obtained through measurement by the laser rangefinder at the second moment. In addition, for a specific implementation of laser distance measurement, refer to the related description in "2. Laser distance measurement". Details are not described herein again. Further, the distance measurement apparatus may determine, based on the distance between each of the one or more objects and the image shooting component, and a spatial projection relationship between an orientation of each object and a region in which each object is located in the second image, the first object from the one or more objects measured by the laser rangefinder, to determine the second distance from the one or more distances obtained through measurement by the laser rangefinder.

Specifically, the distance measurement apparatus may determine a laser reflection point of each object based on the distance between each object and the image shooting component and the orientation of each object. The laser reflection point indicates a reflection location of a laser emitted by the laser rangefinder on a corresponding object.

For ease of understanding, the following continues to use a rectangular sampling anchor as an example to describe the foregoing spatial projection.

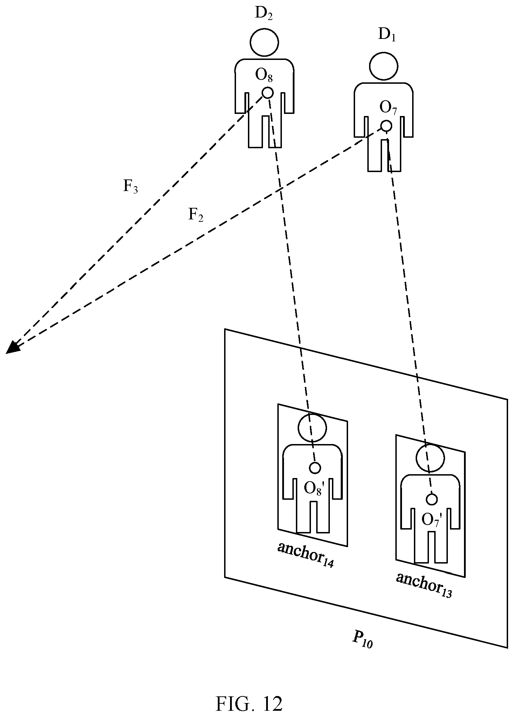

For example, FIG. 12 is a schematic diagram of a second scenario of spatial projection. As shown in FIG. 12, the distance between the object $D_1$ and the image shooting component is $L_9$, and the distance is in an orientation opposite to a direction $F_2$. The distance between the object $D_2$ and the image shooting component is $L_{10}$, and the distance is in an orientation opposite to a direction $F_3$. In this way, the distance measurement apparatus may determine a laser reflection point $O_7$ of the object $D_1$ based on the distance $L_9$ and the orientation of the object $D_1$, and determine a laser reflection point $O_8$ of the object $D_2$ based on the distance $L_{10}$ and the orientation of the object $D_2$.

Further, the distance measurement apparatus may determine imaging of a laser reflection point of each object in the second image, where imaging may be referred to as a projection point. It should be understood that, because the distance that is between each object and the laser rangefinder and that is obtained through measurement by the laser rangefinder is accurate, the laser reflection point that is of the object and that is determined by the distance measurement apparatus should also be located on the object. In this way, imaging of the laser reflection point of each object in the second image, namely, the projection point, should also be located in imaging of the object in the second image. According to this principle, if imaging of the first object in the second image is located in the fourth region, the distance measurement apparatus may determine, from the second image, a projection point located in the fourth region. In this way, in the one or more objects measured by the laser rangefinder, an object corresponding to the projection point located in the fourth region is the first object, and a distance between the object and the laser rangefinder is the second distance.

For ease of understanding, the following continues to use a rectangular sampling anchor as an example to describe the foregoing spatial projection.

As shown in FIG. 12, the distance measurement apparatus may determine, according to an imaging principle of a monocular camera and/or a binocular camera, that imaging of the laser reflection point $O_7$ on a second image $P_{10}$ is a projection point $O_7'$, and determine that imaging of the laser reflection point $O_8$ on the second image $P_{10}$ is a projection point $O_8'$. It can be seen that the projection point $O_7'$ is located within a sampling anchor anchor$_{13}$ but not in a sampling anchor anchor$_{14}$. The projection point $O_8'$ is located within the sampling anchor anchor$_{14}$ but not in the sampling anchor anchor$_{13}$. Therefore, the distance measurement apparatus may determine that in two objects measured by the laser rangefinder, the object $D_1$ corresponding to the projection point $O_7'$ located in the sampling anchor anchor$_{13}$ is the first object, and the distance $L_9$ is the second distance, and determine that the object $D_2$ corresponding to the projection point $O_8'$ located in the sampling anchor anchor$_{14}$ is another object, for example, a third object, and the distance $L_{10}$ is another distance.

It may be understood that the foregoing manners of determining the second distance are merely some example manners, and are not intended as a limitation. For example, the distance measurement apparatus may also perform weighted summation on second distances respectively determined through the monocular distance measurement, the binocular distance measurement, and the laser distance measurement, to determine a final second distance.

Further, after determining the second distance, the first scale, and the second scale, the distance measurement apparatus may determine the first distance with the first scale, the second scale, and the second distance, that is, determine a distance between the first object and the image shooting component at the first moment.

Specifically, because the scale variation of the first object in the image may reflect a change of the distance between the first object and the image shooting component, a relationship that the first scale, the second scale, the first distance, and the second distance meet may be shown in the following formula (10):

$$L_t = L_{t-i} * \frac{S_{t-i}}{S_t} \quad (10)$$

$L_t$ is the first distance, $L_{t-i}$ is the second distance, $S_t$ is the first scale, and $S_{t-i}$ is the second scale. Therefore, the distance measurement apparatus may derive the first distance by calculating the first scale, the second scale, and the second distance based on the relationship shown in the formula (10).

Further, if the image shooting component shoots a fifth image of the first object at a third moment after the first moment, the distance measurement apparatus may determine a third scale of the first object in the fifth image. In this way, the distance measurement apparatus may derive a fifth distance between the first object and the image shooting component at the third moment based on the third scale, the second scale, and the first distance, and so on, to iteratively determine the distance between the first object and the image shooting component, to perform tracking and distance measurement on the first object until the first object leaves a shooting range of the image shooting component.

It should be noted that this embodiment of this application is described by using an example in which the second image is a first-frame image, and is not intended as a limitation. If the second image is a non-first-frame image, the second distance in the formula (10) may be a distance iteratively determined by using the formula (10) last time.

For ease of understanding, the following continues to describe the foregoing example.

If a second distance of the vehicle $A_8$ is 100 m, and the first scale $S_t$ is 1.2, a first distance of the vehicle $A_8$ is 100 x 1/1.2 = 83.3 m. Thus, a distance between the vehicle $A_8$ and the image shooting component decreases.

If a second distance of the vehicle $A_9$ is 200 m, and the first scale $S_t$ is 1.04, a first distance of the vehicle $A_9$ is 200 x 0.8/1.24 = 129 m. Thus, a distance between the vehicle $A_9$ and the image shooting component also decreases.

Optionally, in a first implementation scenario of the embodiment shown in FIG. 7, the distance measurement apparatus may further determine the first distance based on the first scale, the second scale, the second distance, and a third distance.

The third distance may be a distance that is between the first object and the image shooting component and that is obtained through measurement at the first moment, and may be determined through measurement by a laser rangefinder, or may be determined by the distance measurement apparatus based on a third image shot by a monocular camera and/or a binocular camera at the first moment. In other words, the distance measurement apparatus may derive the first distance based on the third distance measured at the first moment, the second distance at the second moment, and a scale variation between the two moments. The third image and the first image may be a same image or two different images. For example, if the first image is an image shot at the first moment by a monocular camera in the image shooting component, and the third image is an image shot at the first moment by a multiocular camera in the image shooting component, the third image and the first image are a same image. For another example, if both the first image and the third image are images shot at the second moment by the multiocular camera in the image shooting component, the third image and the first image are two different images.

For ease of understanding, the following separately describes in detail that the distance measurement apparatus determines the third distance based on the third image, and determines the third distance based on the measurement performed by the laser rangefinder.

a. Determine the third distance based on the third image

In a possible design solution, if the third image is a monocular image, the distance measurement apparatus may determine the third distance through monocular distance measurement.

If the third image and the first image are a same image, it can be learned from the foregoing description of the ICP algorithm that the distance measurement apparatus may identify the first object in the third image. In this way, the distance measurement apparatus may perform monocular distance measurement on the first object in the third image, thereby determining the third distance. For specific implementation of the monocular distance measurement, refer to the related description in "3. Monocular distance measurement". Details are not described herein again.

If the third image and the first image are two different images, when the first object in the first image has been determined, the distance measurement apparatus may determine, from one or more objects in the third image, which object is the first object. For example, the distance measurement apparatus may first perform monocular distance measurement on each object in the third image, to determine a distance between each object in the third image and the image shooting component. For specific implementation of the monocular distance measurement, refer to the related description in "3. Monocular distance measurement". Details are not described herein again. Then, the distance measurement apparatus may determine the first object from the third image based on the distance between each object in the third image and the image shooting component and based on a spatial projection relationship between the third image and the first image, to determine the third distance from one or more distances obtained through measurement by using the monocular distance measurement.

Specifically, the distance measurement apparatus may project, through spatial projection, a region in which each object in the third image is located to the first image, to generate a corresponding first projection region in the first image. For example, the distance measurement apparatus may project, based on the distance between each object in the third image and the image shooting component, the region in which each object in the third image is located into space, to determine a spatial region that may be occupied by each object. Then, the distance measurement apparatus may determine imaging, in the first image, of the spatial region that may be occupied by each object, where a region in which imaging is located is the first projection region. In this way, the distance measurement apparatus may determine, from the first image, the first projection region whose degree of overlap with the first region is greater than the overlap degree threshold. A region, in the third image, corresponding to the first projection region whose degree of overlap is greater than the overlap degree threshold, is a region of the first object in the third image, namely, a third region. Therefore, the first object is determined from the third image, and the third distance is determined.

In another possible design solution, if the third image is a multiocular image, the distance measurement apparatus may determine the third distance through binocular distance measurement.

If the third image and the first image are a same image, it can be learned from the foregoing description of the ICP algorithm that the distance measurement apparatus may identify the first object in the third image. In this way, the distance measurement apparatus may perform binocular distance measurement on the first object in the third image, thereby determining the third distance. For specific implementation of the binocular distance measurement, refer to the related description in "4. Binocular distance measurement". Details are not described herein again.

If the third image and the first image are different images, when the first object in the first image has been determined, the distance measurement apparatus may further determine, from one or more objects in the third image, which object is the first object. For example, the distance measurement apparatus may first perform binocular distance measurement on each object in the third image, to determine the distance between each object in the third image and the image shooting component. For specific implementation of the binocular distance measurement, also refer to the related description in "4. Binocular distance measurement". Details are not described herein again. Then, the distance measurement apparatus may further determine the first object from the third image based on the distance between each object in the third image and the image shooting component and based on the spatial projection relationship between the third image and the first image, to determine which of the foregoing distances is the third distance. For a specific implementation of determining the third distance based on the spatial projection relationship between the third image and the first image, refer to the related description in "determining the third distance through monocular distance measurement". Details are not described herein again.

b. Determine the third distance based on a measurement of the laser rangefinder

The laser rangefinder may measure distances between one or more surrounding objects and the image shooting component. That is, there may be one or more distances obtained through measurement by the laser rangefinder at the first moment. For a specific implementation of laser distance measurement, refer to the related description in "2. Laser distance measurement". Details are not described herein again. Further, the distance measurement apparatus may determine, based on the distance between each of the one or more objects and the image shooting component, and a spatial projection relationship between an orientation of each object and a region in which each object is located in the first image, the first object from the one or more objects measured by the laser rangefinder, to determine the third distance from the foregoing one or more distances. For a specific implementation of determining the third distance based on the spatial projection between the orientation of each object and the region in which each object is located, refer to the related description in "B. Determine the second distance based on a measurement of the laser rangefinder". Details are not described herein again.

It may be understood that the foregoing manners of determining the third distance are merely some example manners, and are not intended as a limitation. For example, the distance measurement apparatus may also perform weighted summation on third distances respectively determined through binocular distance measurement, binocular distance measurement, and laser distance measurement, to determine a final third distance.

Further, after determining the third distance, the distance measurement apparatus may determine a distance residual based on the first scale, the second scale, the second distance, and the third distance, and determine the first distance based on the distance residual and the third distance.

The distance residual may indicate a difference between the measured third distance and the first distance derived based on the first scale, the second scale, and the second distance. A smaller difference indicates more accurate distance measurement. For example, the first scale, the second scale, the second distance, the third distance, and the distance residual may meet a relationship shown in the following formula (11):

$$residual = \sum_{i=1}^{n} LossFunction\left(L'_t - L_{t-i} * \frac{S_{t-i}}{S_t}\right) \quad (11)$$

*residual* may be the distance residual, $L'_t$ may be the third distance, and n may be a positive integer less than or equal to t. In this way, the measuring apparatus may calculate the distance residual and the third distance by using a maximum likelihood algorithm, such as a Gauss-Newton method or a Levenberg-Marquardt algorithm, to determine the first distance closer to a real distance.

Further, if the image shooting component shoots the fifth image of the first object at the third moment after the first moment, the distance measurement apparatus may determine the third scale of the first object in the fifth image. In this way, the distance measurement apparatus may further derive the fifth distance between the first object and the image shooting component at the third moment based on the second scale, the third scale, the first distance, and a sixth distance. The sixth distance may be a distance that is between the first object and the image shooting component and that is measured at the third moment, namely, a measured distance. In this way, the distance between the first object and the image shooting component may be iteratively determined, to perform tracking and distance measurement on the first object until the first object leaves the shooting range of the image shooting component.

It should be understood that, because the distance between the first object and the image shooting component may be determined through continuous optimization based on the distance residual, the distance residual determined through iteration may become smaller through the continuous optimization, so that the determined distance between the first object and the image shooting component becomes more accurate.

It should be further noted that this embodiment of this application is described by using an example in which the second image is a first-frame image, and is not intended as a limitation. If the second image is a non-first-frame image, the second distance in the formula (11) may be a distance iteratively determined by using the formula (11) last time. In addition, a relationship shown in the foregoing formula (11) is merely an example manner, and is not intended as a limitation. For example, the distance measurement apparatus may determine the residual distance by using different loss functions, such as a HuberLoss function, a CauchyLoss function, and an L1loss function. Alternatively, for another example, the first scale, the second scale, the second distance, the third distance, and the distance residual may meet a relationship shown in the following formula (12):

$$residual = \sum_{i=1}^{n} \left( x_t - x_{t-i} \times \frac{s_{t-i}}{s_t} \right)^2 \quad (12)$$

Optionally, in a second implementation scenario of the embodiment shown in FIG. 7, to reduce a computation amount of binocular distance measurement executed by the distance measurement apparatus, after the distance measurement apparatus determines a left-ocular sampling anchor of the first object in a left-ocular image, the distance measurement apparatus may determine a region corresponding to the left-ocular sampling anchor in the right-ocular image, to perform an NCC correlation algorithm for the region. For example, the distance measurement apparatus may project the left-ocular sampling anchor into the right-ocular image to obtain a projection frame, and then scale up the projection frame according to a predefined formula, for example, increase a length and/or a width of the projection anchor by a predefined value, to obtain a scaled-up anchor. A region covered by the scaled-up anchor in the right-ocular image is a region corresponding to the left-ocular sampling anchor in the right-ocular image. Because an area of the region is less than an area of the right-ocular image, compared with globally performing the NCC correlation algorithm for the right-ocular image, performing the NCC correlation algorithm for the region may effectively reduce the computation amount of the distance measurement apparatus, thereby improving processing efficiency and reducing resource overheads.

For ease of understanding, the following uses the vehicle $A_8$ in the foregoing example to describe how the distance measurement apparatus determines the scaled-up anchor.

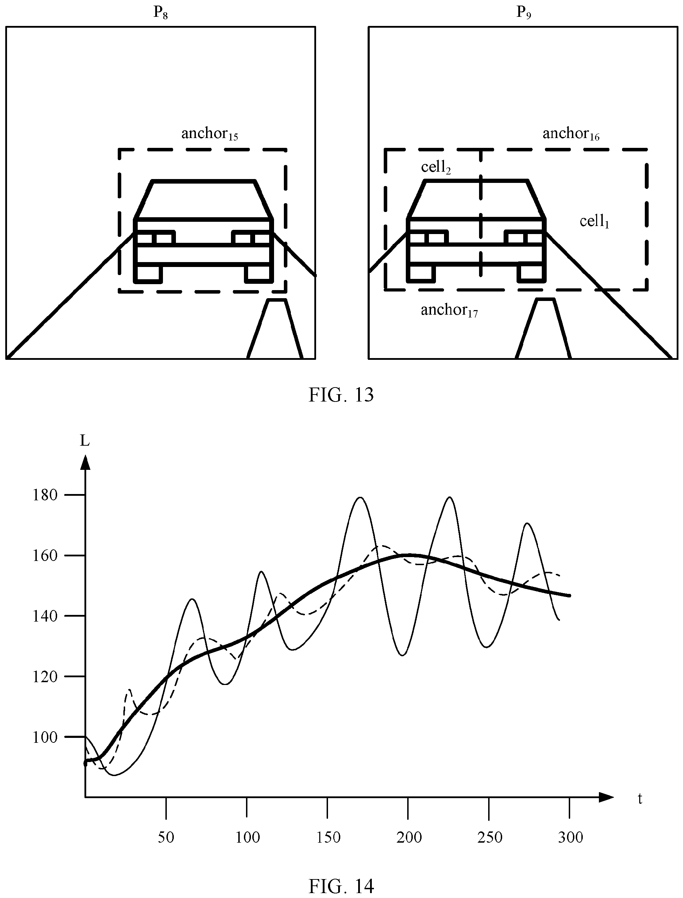

FIG. 13 is a schematic diagram of a scenario of NCC detection. As shown in FIG. 13, a left-ocular image of the vehicle $A_8$ is Ps, and a right-ocular image of the vehicle $A_8$ is $P_9$. The distance measurement apparatus may determine a left-ocular sampling anchor anchor$_{15}$ of the vehicle $A_8$ from the left-ocular image Ps, and project the left-ocular sampling anchor anchor$_{15}$ to the right-ocular image $P_9$, to obtain a projection anchor anchor$_{16}$. The projection anchor anchor$_{16}$ covers a region cell$_1$ in the right-ocular image $P_9$. In this way, the distance measurement apparatus may scale up the projection anchor anchor$_{16}$ according to a predefined formula, for example, add a predefined value to a length of the projection anchor anchor$_{16}$ to the left, to obtain a scaled-up anchor anchor$_{17}$. Because the region cell$_1$ + a region celh covered by the scaled-up anchor anchor$_{17}$ in the right-ocular image $P_9$ may cover the whole contour of the vehicle $A_8$ in the right-ocular image $P_9$, the distance measurement apparatus performs the NCC related algorithm for the region cell$_1$ + the region celh to accurately determine a right-ocular sampling anchor of the vehicle $A_8$.

It can be learned based on the distance measurement method shown in FIG. 7 that a scale variation of the first object in an image may accurately reflect a change of a distance. For example, if a scale of the first object in the image is increasing, a distance between the first object and the image shooting component is decreasing. Conversely, if the scale of the first object in the image is decreasing, the distance between the first object and the image shooting component is increasing. Therefore, the distance measurement apparatus may determine the first distance based on the second distance and the change of the distance reflected by the first scale and the second scale. In other words, the distance measurement apparatus may determine a distance at a next moment based on a distance at a previous moment and a change of a distance from the previous moment to the next moment. Further, on the basis that a distance determined at the first time is accurate, a distance determined at each subsequent moment is accurate. Therefore, a problem that distance measurement lacks stability and the distance measurement fluctuates greatly can be resolved, thereby effectively reducing a collision risk. For example, FIG. 14 is a simulation diagram of tracking and distance measurement. A horizontal axis in FIG. 14 indicates time, and a unit of the time may be a frame (frame). A vertical axis indicates a distance, and a unit of the distance may be a meter (meter). In FIG. 14, a thick solid line is a distance change curve measured by using the distance measurement method in this application, a thin solid line is a distance change curve measured through binocular distance measurement, and a dotted line is a distance change curve measured through monocular distance measurement. It can be seen that both the binocular distance measurement and the monocular distance measurement fluctuate greatly with poor distance measurement stability, and are inaccurate. However, fluctuation of the distance measurement method in this application is small, and distance measurement stability is good. Therefore, a distance measurement result is accurate.

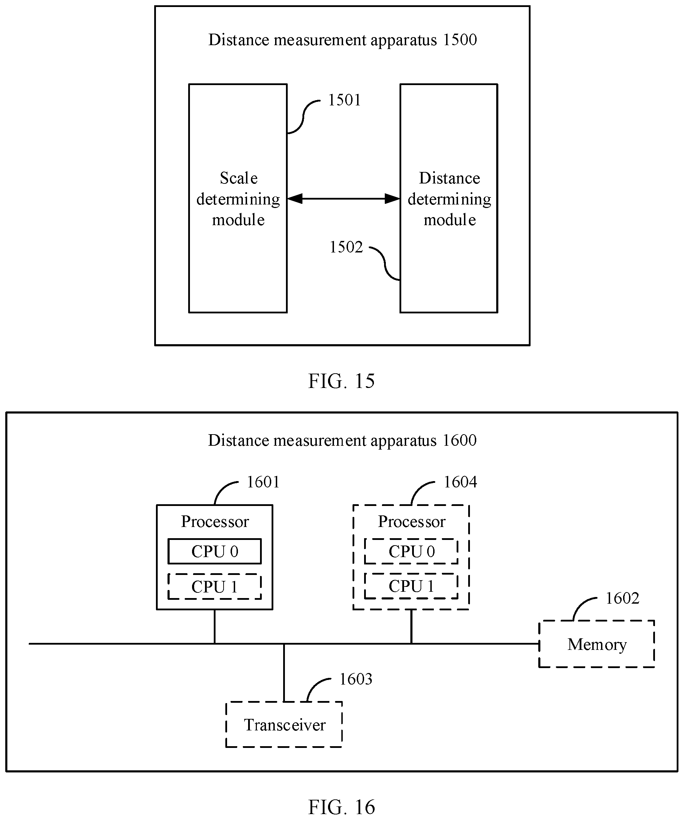

The methods provided in embodiments of this application are described above in detail with reference to FIG. 7 to FIG. 14. The following describes in detail, with reference to FIG. 15 and FIG. 16, a distance measurement apparatus configured to perform the method provided in embodiments of this application.

For example, FIG. 15 is a first schematic diagram of a structure of a distance measurement apparatus according to an embodiment of this application. As shown in FIG. 15, a distance measurement apparatus 1500 includes a scale determining module 1501 and a distance determining module 1502. For ease of description, FIG. 15 shows only main parts of the distance measurement apparatus 1500.

The distance measurement apparatus 1500 may be applicable to the distance measurement system shown in FIG. 6, and perform the distance measurement method shown in FIG. 7.

The scale determining module 1501 is configured to perform S701.

The distance determining module 1502 is configured to perform S702.

Optionally, the distance measurement apparatus 1500 may further include a transceiver module (not shown in FIG. 15), configured to implement a transceiver function of the distance measurement apparatus 1500. Optionally, the transceiver module may include a receiving module and a sending module (not shown in FIG. 15). The receiving module is configured to implement a receiving function of the distance measurement apparatus 1500, and the sending module is configured to implement a sending function of the distance measurement apparatus 1500.

Optionally, the distance measurement apparatus 1500 may further include a storage module (not shown in FIG. 15). The storage module stores a program or instructions. When the scale determining module 1501 and the distance determining module 1502 execute the program or the instructions, the distance measurement apparatus 1500 is enabled to perform the method shown in FIG. 7, to determine a first distance.

It should be understood that the scale determining module 1501 and the distance determining module 1502 that are involved in the distance measurement apparatus 1500 may be implemented by a processor or a processor-related circuit component, and may be a processor or a processing unit. The transceiver module may be implemented by a transceiver or a transceiver-related circuit component, and may be a transceiver or a transceiver unit.

It should be noted that the distance measurement apparatus 1500 may be a terminal device, or may be a chip (system) or another part or component disposed in the foregoing terminal device, or an apparatus including the terminal device. This is not limited in this embodiment of this application.

In addition, for technical effect of the distance measurement apparatus 1500, refer to technical effect of the method shown in FIG. 7. Details are not described herein again.

For example, FIG. 16 is a second schematic diagram of a structure of a distance measurement apparatus according to an embodiment of this application. The distance measurement apparatus may be a terminal device, or may be a chip (system) or another part or component that may be disposed in the terminal device. As shown in FIG. 16, the distance measurement apparatus 1600 may include a processor 1601. Optionally, the distance measurement apparatus 1600 may further include a memory 1602 and/or a transceiver 1603. The processor 1601 is coupled to the memory 1602 and the transceiver 1603, for example, may be connected to the memory 1602 and the transceiver 1603 by using a communication bus.

The following describes in detail each constituent part of the distance measurement apparatus 1600 with reference to FIG. 16.

The processor 1601 is a control center of the distance measurement apparatus 1600, and may be a processor, or may be a collective name of a plurality of processing elements. For example, the processor 1601 is one or more central processing units (central processing units, CPUs), or may be an application-specific integrated circuit (application specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1601 may execute various functions of the distance measurement apparatus 1600 by running or executing a software program stored in the memory 1602, and invoking data stored in the memory 1602.

During specific implementation, in an embodiment, the processor 1601 may include one or more CPUs, for example, a CPU 0 and a CPU 1 shown in FIG. 16.

During specific implementation, in an embodiment, the distance measurement apparatus 1600 may further include a plurality of processors, for example, the processor 1601 and a processor 1604 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

The memory 1602 is configured to store a software program for performing the solutions of this application, and the processor 1601 controls execution of the software program. For a specific implementation, refer to the foregoing method embodiments. Details are not described herein again.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), magnetic disk storage medium or another magnetic storage device, or any other medium that can be used to carry or store expected program code in a form of instructions or a data structure and that is accessible to a computer, but is not limited thereto. The memory 1602 may be integrated with the processor 1601, or may exist independently, and is coupled to the processor 1601 by using an interface circuit (not shown in FIG. 16) of the distance measurement apparatus 1600. This is not specifically limited in this embodiment of this application.

The transceiver 1603 is configured to communicate with another apparatus. For example, the transceiver 1603 may be configured to communicate with a network device or communicate with another terminal device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 by using an interface circuit (not shown in FIG. 16) of the distance measurement apparatus 1600. This is not specifically limited in this embodiment of this application.

It should be noted that a structure of the distance measurement apparatus 1600 shown in FIG. 16 does not constitute a limitation on the distance measurement apparatus. An actual distance measurement apparatus may include more or fewer parts than those shown in the figure, or combine some parts, or have different part arrangements.

In addition, for technical effect of the distance measurement apparatus 1600, refer to technical effect of the method described in the foregoing method embodiment. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When the software is used to implement embodiments, all or some of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A distance measurement method, comprising:

   determining a first scale, wherein the first scale is a scale of a first object in a first image, and the first image is an image shot by an image shooting component at a first moment; and

determining a first distance based on the first scale, a second scale, and a second distance, wherein the second scale is a scale of the first object in a second image, the second image is an image shot by the image shooting component at a second moment, the second moment is before the first moment, the second distance is a distance between the first object and the image shooting component at the second moment, and the first distance is a distance between the first object and the image shooting component at the first moment.

2. The distance measurement method according to claim 1, wherein
the first scale is determined based on the second scale and a scale change amount, and the scale change amount indicates a scale variation between the first scale and the second scale.

3. The distance measurement method according to claim 2, wherein
the scale change amount is determined based on a location relationship between a first contour point and a second contour point, wherein the second contour point is a pixel on a second contour, the second contour is a contour of the first object in the second image, a contour of the first object in the first image is a first contour, and the first contour point is a pixel that is on the first contour and that is corresponding to a location of the second contour point.

4. The distance measurement method according to claim 3, wherein the location relationship meets:

$$\begin{cases} x_t = s^x_{t-i} * x_{t-i} + d^x_{t-i} \\ y_t = s^y_{t-i} * y_{t-i} + d^y_{t-i} \end{cases},$$

wherein
t is a positive integer, i is a positive integer less than or equal to t, $(x_t, y_t)$ is used to represent a location of the first contour point, $(x_{t-i}, y_{t-i})$ is used to represent the location of the second contour point, $s^x_{t-i}$ is the scale change amount in an x-axis direction, $s^y_{t-i}$ is the scale change amount in a y-axis direction, and $d^x_{t-i}$ and $d^y_{t-i}$ are compensation values.

5. The distance measurement method according to claim 3, wherein
the first contour point is determined from a first region of the first image, and the second contour point is determined from a second region of the second image.

6. The distance measurement method according to any one of claims 1 to 5, wherein the first scale, the second scale, the first distance, and the second distance meet the following relationship:

$$L_t = L_{t-i} * \frac{S_{t-i}}{S_t},$$

wherein
t is a positive integer, i is a positive integer less than or equal to t, $L_t$ is the first distance, $L_{t-i}$ is the second distance, $S_t$ is the first scale, and $S_{t-i}$ is the second scale.

7. The distance measurement method according to any one of claims 1 to 4, wherein the determining a first distance based on the first scale, a second scale, and a second distance comprises:
determining the first distance based on the first scale, the second scale, the second distance, and a third distance, wherein the third distance is a distance that is between the first object and the image shooting component and that is measured at the first moment.

8. The distance measurement method according to claim 7, wherein the determining the first distance based on the first scale, the second scale, the second distance, and a third distance comprises:

determining a distance residual based on the first scale, the second scale, the second distance, and the third distance; and
determining the first distance based on the distance residual and the third distance, wherein the first scale, the second scale, the second distance, the third distance, and the distance residual meet the following relationship:

$$residual = \sum_{i=1}^{n} LossFunction(L'_t - L_{t-i} * \frac{S_{t-i}}{S_t}),$$

wherein

*residual* is the distance residual, $L'_t$ is the third distance, $L_{t-i}$ is the second distance, $S_t$ is the first scale, $S_{t-i}$ is the second scale, and n is a positive integer less than or equal to t.

9. The distance measurement method according to claim 7 or 8, wherein
the third distance is a distance determined based on a third image of the first object, wherein the third image is an image shot by the image shooting component at the first moment, the first object is located in a third region in the third image, the first object is located in a first region in the first image, a region for projection of the third region in the first image is a first projection region, and a degree of overlap between the first projection region and the first region is greater than an overlap degree threshold.

10. A distance measurement apparatus, comprising a scale determining module and a distance determining module, wherein

the scale determining module is configured to determine a first scale, wherein the first scale is a scale of a first object in a first image, and the first image is an image shot by an image shooting component at a first moment; and
the distance determining module is configured to determine a first distance based on the first scale, a second scale, and a second distance, wherein the second scale is a scale of the first object in a second image, the second image is an image shot by the image shooting component at a second moment, the second moment is before the first moment, the second distance is a distance between the first object and the image shooting component at the second moment, and the first distance is a distance between the first object and the image shooting component at the first moment.

11. The distance measurement apparatus according to claim 10, wherein
the first scale is determined based on the second scale and a scale change amount, and the scale change amount indicates a scale variation between the first scale and the second scale.

12. The distance measurement apparatus according to claim 11, wherein
the scale change amount is determined based on a location relationship between a first contour point and a second contour point, wherein the second contour point is a pixel on a second contour, the second contour is a contour of the first object in the second image, a contour of the first object in the first image is a first contour, and the first contour point is a pixel that is on the first contour and that is corresponding to a location of the second contour point.

13. The distance measurement apparatus according to claim 12, wherein the location relationship meets:

$$\begin{cases} x_t = s^x_{t-i} * x_{t-i} + d^x_{t-i} \\ y_t = s^y_{t-i} * y_{t-i} + d^y_{t-i} \end{cases},$$

wherein

t is a positive integer, i is a positive integer less than or equal to t, $(x_t, y_t)$ is used to represent a location of the first contour point, $(x_{t-i}, y_{t-i})$ is used to represent the location of the second contour point, $s^x_{t-i}$ is the scale change amount in an x-axis direction, $s^y_{t-i}$ is the scale change amount in a y-axis direction, and $d^x_{t-i}$ and $d^y_{t-i}$ are compensation values.

14. The distance measurement apparatus according to claim 12, wherein
the first contour point is determined from a first region of the first image, and the second contour point is determined from a second region of the second image.

15. The distance measurement apparatus according to any one of claims 10 to 14, wherein the first scale, the second scale, the first distance, and the second distance meet the following relationship:

$$L_t = L_{t-i} * \frac{S_{t-i}}{S_t},$$

wherein

t is a positive integer, i is a positive integer less than or equal to t, $L_t$ is the first distance, $L_{t-i}$ is the second distance, $S_t$ is the first scale, and $S_{t-i}$ is the second scale.

16. The distance measurement apparatus according to any one of claims 10 to 13, wherein
the distance determining module is further configured to determine the first distance based on the first scale, the second scale, the second distance, and a third distance, wherein the third distance is a distance that is between the first object and the image shooting component and that is measured at the first moment.

17. The distance measurement apparatus according to claim 16, wherein

the distance determining module is further configured to determine a distance residual based on the first scale, the second scale, the second distance, and the third distance, and determine the first distance based on the distance residual and the third distance, wherein the first scale, the second scale, the second distance, the third distance, and the distance residual meet the following relationship:

$$residual = \sum_{i=1}^{n} LossFunction(L'_t - L_{t-i} * \frac{S_{t-i}}{S_t}),$$

wherein

residual is the distance residual, $L'_t$ is the third distance, $L_{t-i}$ is the second distance, $S_t$ is the first scale, $S_{t-i}$ is the second scale, and n is a positive integer less than or equal to t.

18. The distance measurement apparatus according to claim 16 or 17, wherein
the third distance is a distance determined based on a third image of the first object, wherein the third image is an image shot by the image shooting component at the first moment, the first object is located in a third region in the third image, the first object is located in a first region in the first image, a region for projection of the third region in the first image is a first projection region, and a degree of overlap between the first projection region and the first region is greater than an overlap degree threshold.

19. A distance measurement apparatus, comprising a processor, wherein the processor is coupled to a memory; and the processor is configured to execute a computer program stored in the memory, so that the apparatus performs the method according to any one of claims 1 to 9.

20. A distance measurement apparatus, comprising a processor and an interface circuit, wherein

the interface circuit is configured to receive code instructions and transmit the code instructions to the processor; and
the processor is configured to run the code instructions to perform the method according to any one of claims 1 to 9.

21. A terminal device, comprising the distance measurement apparatus according to any one of claims 10 to 20.

22. A distance measurement system, comprising: an image shooting component and a distance measurement apparatus, wherein

the image shooting component is configured to shoot a first image of a first object at a first moment, and shoot a first image of a second object at a second moment; and

the distance measurement apparatus is configured to perform the method according to any one of claims 1 to 9 based on the first image and the second image.

23. The system according to claim 22, wherein the image shooting component comprises a monocular camera and/or a multiocular camera.

24. The system according to claim 22 or 23, wherein the image shooting component further comprises a laser rangefinder, and the laser rangefinder is connected to the distance measurement apparatus.

25. A computer-readable storage medium storing computer programs or instructions, wherein when the computer programs or the instructions are executed by a distance measurement apparatus, the distance measurement apparatus is enabled to implement the method according to any one of claims 1 to 9.

26. A computer program product, wherein the computer program product comprises computer programs or instructions, and when the computer programs or the instructions are executed by a distance measurement apparatus, the distance measurement apparatus is enabled to implement the method according to any one of claims 1 to 9.

$A_1$

$A_2$

$L_1$

FIG. 1

$B_1$

$L_2$

$B_2$

FIG. 2

$A_3$

$A_4$

$F_1$

$S_1$

$S_3$  $S_2$

$O_s$

$S_4$

FIG. 3

$P_1$

$H_2$

$H_1$

$A_6$

$A_5$

FIG. 4

$A_7$

$W_1$

$L_7$

$L_L$

$W_3$

$P_2$

$W_2$

$P_3$

$L_R$

$O_L$

B

$O_R$

FIG. 5

Distance measurement system 600

601

Distance
measurement
apparatus

Image shooting
component

602

FIG. 6

S701: Determine a first scale

S702: Determine a first distance based on the first scale,
a second scale, and a second distance

FIG. 7

$P_4$

anchor$_2$

$O_4$

$A_9$

$O_5$    $O_6$

$O_1$

$A_8$

$O_2$    $O_3$

anchor$_1$

FIG. 8

FIG. 9

P4

anchor$_2$

○ O$_4$'

O$_4$

A$_9$

O$_5$  O$_6$

○  ○
O$_5$'  O$_6$'

○ O$_1$'

O$_1$

A$_8$

O$_2$    O$_3$

○    ○
O$_2$'    O$_3$'

anchor$_1$

FIG. 10

FIG. 11

FIG. 12

P<sub>8</sub>

P<sub>9</sub>

anchor$_{15}$

anchor$_{16}$

cell$_2$

cell$_1$

anchor$_{17}$

FIG. 13

FIG. 14

Distance measurement apparatus 1500

Scale
determining
module

1501

1502

Distance
determining
module

FIG. 15

Distance measurement apparatus 1600

1601

Processor

CPU 0

CPU 1

1604

Processor

CPU 0

CPU 1

1602

Memory

1603

Transceiver

FIG. 16

## INTERNATIONAL SEARCH REPORT

| International application No. |
| --- |
| **PCT/CN2021/080081** |

| | |
| --- | --- |
| **A.** | **CLASSIFICATION OF SUBJECT MATTER** |

G01C 3/00(2006.01)i

According to International Patent Classification (IPC) or to both national classification and IPC

| | |
| --- | --- |
| **B.** | **FIELDS SEARCHED** |

Minimum documentation searched (classification system followed by classification symbols)

G01C3/-

Documentation searched other than minimum documentation to the extent that such documents are included in the fields searched

Electronic data base consulted during the international search (name of data base and, where practicable, search terms used)

CNPAT, CNKI, WPI, EPODOC: 时间, 不同, 尺度, 时刻, 比例, 测, 图像, 二, 距, 华为, 比率, 距离, 长度, 变化, 改变, 缩放, 大小; scale, rate, ratio, imag+, time, distance, 2nd, second, two, differ+, length, zoom, var+, chang+, detect+, measur+, sens+

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 105806307 A (XI'AN AIRCRAFT DESIGN INSTITUTE OF AVIATION INDUSTRY CORPORATION OF CHINA) 27 July 2016 (2016-07-27)<br>description, paragraphs [0021]-[0038], and figures 1 and 2 | 1, 10, 19-26 |
| Y | CN 105806307 A (XI'AN AIRCRAFT DESIGN INSTITUTE OF AVIATION INDUSTRY CORPORATION OF CHINA) 27 July 2016 (2016-07-27)<br>description, paragraphs [0021]-[0038], and figures 1 and 2 | 2-6, 11-15 |
| Y | US 9303982 B1 (AMAZON TECHNOLOGIES, INC.) 05 April 2016 (2016-04-05)<br>description columns 6-8, figures 3(a)-3(b) | 2-6, 11-15 |
| A | US 2014294246 A1 (FUJITSU LIMITED) 02 October 2014 (2014-10-02)<br>entire document | 1-26 |
| A | CN 109163698 A (BAIDU ONLINE NETWORK TECHNOLOGY (BEIJING) CO., LTD.) 08 January 2019 (2019-01-08)<br>entire document | 1-26 |
| A | CN 110197104 A (HANGZHOU HIKVISION DIGITAL TECHNOLOGY CO., LTD.) 03 September 2019 (2019-09-03)<br>entire document | 1-26 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 November 2021** | **25 November 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/080081** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2018165822 A1 (LIGHMETRICS TECHNOLOGIES PVT. LTD.) 14 June 2018 (2018-06-14)<br>    entire document | 1-26 |

Form PCT/ISA/210 (second sheet) (January 2015)

**INTERNATIONAL SEARCH REPORT**
Information on patent family members

International application No.

**PCT/CN2021/080081**

| Patent document cited in search report | | | Publication date (day/month/year) | Patent family member(s) | | | Publication date (day/month/year) |
|---|---|---|---|---|---|---|---|
| CN | 105806307 | A | 27 July 2016 | CN | 105806307 | B | 09 October 2018 |
| US | 9303982 | B1 | 05 April 2016 | | None | | |
| US | 2014294246 | A1 | 02 October 2014 | US | 9311757 | B2 | 12 April 2016 |
| | | | | JP | 2014194361 | A | 09 October 2014 |
| | | | | JP | 6194610 | B2 | 13 September 2017 |
| CN | 109163698 | A | 08 January 2019 | | None | | |
| CN | 110197104 | A | 03 September 2019 | | None | | |
| US | 2018165822 | A1 | 14 June 2018 | US | 10529083 | B2 | 07 January 2020 |

Form PCT/ISA/210 (patent family annex) (January 2015)